(19) **Europäisches Patentamt European Patent Office Office européen des brevets**

(11) **EP 4 582 376 A1**

(12) # EUROPEAN PATENT APPLICATION

(43) Date of publication:
**09.07.2025 Bulletin 2025/28**

(21) Application number: **24150495.0**

(22) Date of filing: **05.01.2024**

(51) International Patent Classification (IPC):
**C01B 32/30** (2017.01)    **C09C 1/48** (2006.01)

(52) Cooperative Patent Classification (CPC):
**C09C 1/48; C01B 32/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Orion Engineered Carbons GmbH 65760 Eschborn (DE)**

(72) Inventors:
• **SCHINKEL, Arndt-Peter 56112 Lahnstein (DE)**
• **BOWLES, Alexander 50939 Köln (DE)**
• **WIDJAJA, Andreas 64521 Gross-Gerau (DE)**
• **STANYSCHÖFSKY, Michael 50354 Hürth (DE)**
• **DETERS, David 53173 Bonn (DE)**
• **TIMMERMANS, Eddy 50354 Hürth (DE)**

(74) Representative: **f & e patent Braunsberger Feld 29 51429 Bergisch Gladbach (DE)**

(54) **GASIFICATION OF RECOVERED CARBON BLACK**

(57)    The present invention relates to a method for the treatment of carbon black comprising gasification of a carbon black-containing feedstock at a temperature of 730 °C to 950 °C. The carbon black-containing feedstock is generally pyrolyzed carbon black, such as recovered carbon black. It is believed that the obtained treated carbon black has a lower coke content and thus, the resulting rubber articles have improved properties.

EP 4 582 376 A1

**Description**

**TECHNICAL FIELD**

The present invention relates to a method for the treatment of carbon black comprising gasification of a carbon black-containing feedstock at a temperature of 730 °C to 950 °C. The carbon black-containing feedstock is generally pyrolyzed carbon black, such as recovered carbon black. It is believed that the obtained treated carbon black has a lower coke content and thus, the resulting rubber articles have improved properties.

**TECHNICAL BACKGROUND**

Carbon blacks have numerous uses such as a reinforcing agent or filler for the rubber and tire industries. Moreover, carbon black has seen increased use in other areas such as coloring agents and reprographic toners for copying machines. The various applications of carbon black necessitate a diverse range of carbon black characteristics such as particle size, structure, yield, surface area, and stain.

Recycled blacks are carbon blacks typically obtained from end-of-life products containing carbon black, such as scrap tires (waste tires), and obtained by recycling processes. Production of recycled blacks typically involves 1 to 3 processes. Firstly, a pyrolysis step is deployed to decompose organic components such as rubbers or plastics. Secondly, an optional demineralization step is deployed to dissolve inorganic additives or impurities. Thirdly, the resulting material is milled to produce a controlled particle size distribution.

Tire pyrolysis of end-of-life products containing carbon black is usually carried out at low temperatures and produces a liquid, gaseous and solid fraction. The liquid fraction can then be used to produce new or virgin carbon black in an entrained flow reactor such as a furnace reactor. US 2002/0117388 A1 relates to the pyrolysis of waste rubber materials, including scrap tires. The obtained carbon black is generally referred to as "recovered carbon black" (rCB).

rCB is a complex mixture resulting from the compounds used in pyrolysis. The compounds used in the pyrolysis process may contain various components (i.e. ash) other than carbon black, such as inorganic additives and fillers (e.g., zinc oxide, silicon oxide, sulphur compounds and calcium carbonate) and traces of steel.

However, the performance of rCB is generally poor compared to carbon black produced from e.g., a standard hydrocarbon feedstock such as oil. Accordingly, it is desired to provide a method in which the rCB or carbon black-containing feedstock is treated. Particularly, it is desired to reduce the coke content in the rCB in order to provide treated carbon black.

It has been surprisingly found that the gasification of a carbon black-containing feedstock at a temperature of 730 °C to 950 °C lead to an improved carbon black compared to rCB.

**SUMMARY OF THE INVENTION**

The present invention relates to a method for the treatment of carbon black comprising: gasification of a carbon black-containing feedstock at a temperature of 730 °C to 950 °C.

Furthermore, the present invention relates to the use of gasification of a carbon black-containing feedstock comprising coke at a temperature of 730 °C to 950 °C to selectively reduce the coke content with respect to the carbon black content of the carbon black-containing feedstock. Moreover, the present invention relates to the use of gasification of a carbon black-containing feedstock comprising coke at a temperature of 730 °C to 950 °C to increase the cumulative pore volume for pore sizes of 0.3 to 1.5 nm of the obtained treated carbon black with respect to the cumulative pore volume for pore sizes of 0.3 to 1.5 nm of the carbon black-containing feedstock, wherein the cumulative pore volume is determined as mentioned in the specification.

Additionally, the present invention relates to treated carbon black, wherein the treated carbon black has a MOAH value of below 500 mg/kg, preferably below 300 mg/kg, more preferably below 250 mg/kg, and most preferably below 200 mg/kg, determined as described in the specification. Moreover, the present invention relates to treated carbon black, wherein the treated carbon black has a cumulative pore volume for pore sizes of 0.3 to 1.5 nm of 0.015 to 0.050 cm$^3$/g, wherein the cumulative pore volume is determined as mentioned in the specification.

**BRIEF DESCRIPTION OF THE DRAWINGS**

Figure 1 (FIG. 1): Section of a furnace reactor
Figure 2 (FIG. 2): Feeding and mixing device comprising a nozzle
Figure 3 (FIG. 3): Laval-nozzle for the feeding and mixing device

Figure 4 (FIG. 4): Deagglomeration conduit for the feeding and mixing device
Figure 5 (FIG. 5): Feeding and mixing device without a nozzle

## DETAILED DESCRIPTION

It must be noted that, as used in the specification and the appended claims, the singular forms "a," "an" and "the" include plural referents unless the context clearly dictates otherwise.

As used herein, the term "comprising" is understood to be open-ended and to not exclude the presence of additional undescribed or unrecited elements, materials, ingredients or method steps etc. The terms "including", "containing" and like terms are understood to be synonymous with "comprising". As used herein, the term "consisting of" is understood to exclude the presence of any unspecified element, ingredient or method step etc.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

All parts, amounts, concentrations etc. referred to herein are by weight, unless specified otherwise. If no basis for parts, amounts, concentrations etc. are indicated, the parts, amounts, concentrations etc. are based on the respective composition/atmosphere/gas in which the respective material/parameter etc. is present.

The expression "feedstock" usually refers to the feedstock for the treatment of carbon black. According to the present invention, a carbon black-containing feedstock is used for the treatment of carbon black.

"Carbon black" as referred to herein means a material composed substantially, e.g. to more than 50 wt.%, or more than 70 wt.% or more than 80 wt.%, based on its total weight of carbon that is produced by pyrolysis or radical driven abstraction of not carbon atoms of a carbon black feedstock. Different industrial processes are known for the production of carbon blacks such as the furnace process, gas black process, acetylene black process, thermal black process or lamp black process. The production of carbon blacks is per se well known in the art and for example outlined in J.-B. Donnet et al., "Carbon Black:Science and Technology", 2nd edition, therefore being not described herein in more detail. However, it is possible that "carbon black" comprises impurities as mentioned further below.

The pyrolysis of rubber articles generally involves heating the rubber articles to temperatures, e.g., of at least 360 °C in the absence of oxygen in order to volatilize and decompose the rubber articles, producing oil, gas (pyrolysis gas), and char. The expression "pyrolyzed carbon black-containing particulate" is used for the expression "char" alternatively.

As used herein, the term "rubber articles" refers to articles composed of rubber, e.g., composed of at least 40 wt.-% of rubber, based on the total weight of the rubber article. Examples of rubber articles include, but are not limited to, tires, conveyer belts, gaskets, such as door gaskets, drive belts, floor mats, shoe soles, belts, cable sheaths, hoses, and the like. Preferred rubber articles include tires. The term "rubber" includes both natural and synthetic rubbers or mixtures thereof. Natural rubber (polyisoprene) may be obtained from rubber trees (Helvea brasiliensis), guayule, and dandelion. Synthetic rubber may comprise styrene-butadiene rubber such as emulsion-styrene-butadiene rubber and solution-styrene-butadiene rubber, polybutadiene, polyisoprene, ethylene-propylene-diene rubber, ethylene-propylene rubber, butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or mixture of combinations of any of the foregoing.

The expression "material" refers to the material that is treated, such as the material that is subjected to the gasification.

The expressions "obtained treated carbon black" and "treated carbon black" are used interchangeably.

The expression "particulate carbon black-containing feedstock" is used for the feedstock for the pyrolysis. Thus, the expression "particulate carbon black-containing feedstock" can be referred to as particulate carbon black-containing pyrolysis feedstock". The "particulate carbon black-containing feedstock" is usually a rubber granulate that preferably comprises carbon black. Alternatively, the "particulate carbon black-containing feedstock" is a plastic granulate, and/or biomass-based granulate.

The expression "carbon black-containing feedstock" is used for the feedstock for the gasification. Thus, the expression "carbon black-containing feedstock" can be referred to as carbon black-containing gasification feedstock". The "carbon black-containing feedstock" is usually a recovered carbon black. Alternatively, the "carbon black-containing feedstock" can be a mixture of recovered carbon black and virgin carbon black.

The present invention relates to a method for the treatment of carbon black comprising: gasification of a carbon black-containing feedstock at a temperature of 730 °C to 950 °C.

Furthermore, the present invention relates to the use of gasification of a carbon black-containing feedstock comprising coke at a temperature of 730 °C to 950 °C to selectively reduce the coke content with respect to the carbon black content of the carbon black-containing feedstock.

The gasification can be carried out by using $H_2O$ and/or $CO_2$. $H_2O$ is particularly preferred. For the gasification, $H_2O$ reacts with carbon of the carbon black-containing feedstock to CO and $H_2$. Alternatively, $CO_2$ reacts with carbon of the carbon black-containing feedstock to CO. It has been surprisingly found that the gasification can be used to selectively remove coke that is present in carbon black. Coke is usually present in carbon black after the pyrolysis of a particulate carbon black-containing feedstock, such as waste tire rubber granulate.

Particularly, at low gasification temperatures, the selectivity of coke compared to carbon black is high. Accordingly, the gasification can be carried out at a temperature of 730 °C to 910 °C, preferably 730 °C to 900 °C, more preferably 740 to 890 °C, even more preferably 740 °C to 860 °C, and most preferably 790 to 850 °C. For instance, the gasification can be carried out at a temperature of 730 °C, 740 °C, 750 °C, 760 °C, 770 °C, 780 °C, 790 °C, 800 °C, 810 °C, 820 °C, 830 °C, 840 °C, or 850 °C. Said temperatures can be used as lower and upper limited for a specific temperature range. If the temperature exceeds 950 °C, it is believed that the selectivity is lower.

The gasification can be carried out by subjecting the material (such as the material after the pyrolysis) with a gas comprising $H_2O$ and/or $CO_2$, preferably $H_2O$. It is particularly desired that steam is subjected to carbon black-containing feedstock. The steam can already have the desired temperature for the gasification, such as 730 °C to 950 °C.

Accordingly, a gas comprising or consisting of $H_2O$ can be preheated to a temperature of 200 °C to 950 °C, such as 730 °C to 950 °C, 730 °C to 910 °C, 730 °C to 900 °C, 740 to 890 °C, 740 °C to 860 °C, or 790 to 850 °C. Accordingly, the steam can be preheated to a temperature of 200 °C to 950 °C, such as 730 °C to 950 °C, 730 °C to 910 °C, 730 °C to 900 °C, 740 to 890 °C, 740 °C to 860 °C, or 790 to 850 °C. It is possible that the steam is preheated by a heat exchanger. The heat exchanger can exchange heat from another gas stream, such as the pyrolysis gas stream, the gasification gas stream and/or the buffer gas stream to the steam.

The gasification can be carried out by subjecting the carbon black-containing feedstock with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

The gasification can be carried out by subjecting the carbon black-containing feedstock with steam comprising 20 to 100 mol-% $H_2O$, preferably 30 to 100 mol-% $H_2O$, more preferably 40 to 90 mol-% $H_2O$, most preferably 50 to 80 mol-% $H_2O$, based on the total number of moles of the steam.

The gasification can be carried out by subjecting the carbon black-containing feedstock with a gas comprising 20 to 100 mol-% $H_2O$, preferably 30 to 100 mol-% $H_2O$, more preferably 40 to 90 mol-% $H_2O$, most preferably 50 to 80 mol-% $H_2O$, based on the total number of moles of the gas. Most preferably, the gasification can be carried out by subjecting the carbon black-containing feedstock with steam.

The gasification can be carried out by subjecting the carbon black-containing feedstock with a gas comprising 0 to 60 mol-% $N_2$, preferably 0 to 30 mol-% $N_2$, more preferably 0 to 20 mol-% $N_2$, most preferably 0 to 10 mol-% $N_2$, based on the total number of moles of the steam. Most preferably, the gasification can be carried out by subjecting the carbon black-containing feedstock with a gas free of nitrogen.

The gasification can be carried out by subjecting the carbon black-containing feedstock with a gas comprising 20 to 100 mol-% $CO_2$, preferably 30 to 100 mol-% $CO_2$, more preferably 40 to 90 mol-% $CO_2$, most preferably 50 to 80 mol-% $CO_2$, based on the total number of moles of the gas.

The gasification atmosphere in which the carbon black-containing feedstock is treated can comprise 20 to 100 mol-% $H_2O$ and/or $CO_2$, preferably 30 to 100 mol -% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the carbon black-containing feedstock is treated.

The gasification atmosphere in which the carbon black-containing feedstock is treated can comprise 20 to 100 mol-% $H_2O$, preferably 30 to 100 mol -% $H_2O$, more preferably 40 to 90 mol-% $H_2O$, most preferably 50 to 80 mol-% $H_2O$, based on the total number of moles of the gasification atmosphere in which the carbon black-containing feedstock is treated.

The gasification atmosphere which in the carbon black-containing feedstock is treated can comprise 20 to 100 mol-% $CO_2$, preferably 30 to 100 mol -% $CO_2$, more preferably 40 to 90 mol-% $CO_2$, most preferably 50 to 80 mol-% $CO_2$, based on the total number of moles of the gasification atmosphere in which the carbon black-containing feedstock is treated.

The gasification can be carried out by subjecting the carbon black-containing feedstock with a gas comprising up to 20 mol-% $H_2$, preferably up to 10 mol-% $H_2$, more preferably up to 5 mol-% $H_2$, most preferably up to 1 mol-% H2, based on the total number of moles of the gas. Preferably no $H_2$ is present in the gas that is subjecting the carbon black-containing feedstock.

The gasification atmosphere in which the carbon black-containing feedstock is treated can comprise up to 20 mol-% $H_2$, preferably up to 10 mol-% $H_2$, more preferably up to 5 mol-% $H_2$, most preferably up to 1 mol-% $H_2$, based on the total number of moles of the gasification atmosphere in which the carbon black-containing feedstock is treated.

The gasification atmosphere in which the carbon black-containing feedstock is treated can comprise 1 to 30 mol-% $H_2$, preferably 3 to 25 mol-% $H_2$, more preferably 4 to 20 mol-% $H_2$, and most preferably 6 to 15 mol-% $H_2$, based on the total number of moles of the gasification atmosphere in which the carbon black-containing feedstock is treated.

A high hydrogen containing atmosphere can be obtained by using a hydrogen burner.

The carbon black-containing feedstock can be heated to the required temperature for the gasification by using a burner, preferably the fuel for the burner is hydrogen or natural gas, preferably hydrogen. Thus, the burner for the gasification can be a hydrogen burner. A hydrogen burner only produces water that can directly be used for the gasification. Accordingly, it may not be necessary to provide steam or additionally water for the gasification. In other words, no water and/or $CO_2$ is (additionally) subjected to a reactor for the gasification.

The required $H_2O$ for the gasification as well as the required heat can be provided by at least one hydrogen burner.

The carbon black-containing feedstock can be milled before the gasification step, and/or wherein the obtained treated carbon black is milled after the gasification step. For instance, mechanical (impact) milling, jet milling, ultrasonic milling and/or electrical arc milling, preferably ultrasonic milling.

The gasification can be carried out for 1 min to 10 h, preferably 10 min to 5 h, more preferably 20 min to 3 h, and most preferably 30 min to 2 h.

After the gasification of the carbon black-containing feedstock, a treated carbon black is obtained. Since the gasification selectively reduce the coke content (de-coking) in a carbon black comprising coke (e.g. recovered carbon black, or pyrolyzed carbon black), the obtained treated carbon black typically comprises a lower coke content compared to the pyrolyzed carbon black-containing particulate (e.g. recovered carbon black, or pyrolyzed carbon black). Thus, a treated carbon black is usually obtained comprising a lower coke content compared to the carbon black-containing feedstock. A low coke content is particularly preferred since carbon black having a low coke content performs better as a filler in rubber articles, such as tires. For instance, the tensile strength, the tear resistance and/or the max loss factor tan(d) are improved.

The carbon black-containing feedstock can comprise recovered carbon black containing feedstock. In other words, the carbon black-containing feedstock can be recovered carbon black. The carbon black-containing feedstock can be recovered carbon black and the recovered carbon black can be derived from the pyrolysis of particulate carbon black-containing feedstock such as rubber granulate, plastic granulate, and/or biomass-based granulate, preferably rubber granulate, more preferably tire rubber granulate. The rubber granulate usually comprises carbon black.

For instance, the carbon black containing feedstock is derived from rubber granulate, plastic granulate, and/or biomass-based granulate, preferably the particulate carbon black-containing feedstock comprises rubber granulate comprising carbon black. These granulates usually comprise carbon black.

Thus, the carbon black-containing feedstock can comprise coke. Coke is generally formed by the pyrolysis of grubber granulate. Accordingly, the carbon black-containing feedstock is generally considered as carbon black obtained after a pyrolysis.

The carbon black-containing feedstock can comprise 1 to 50 wt.-% coke, preferably 5 to 40 wt.-% coke, more preferably 6 to 35 wt.-% coke, and most preferably 10 to 30 wt.-% coke, based on the total weight of the carbon black-containing feedstock.

The carbon black containing feedstock can be derived from a tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler. The carbon black containing feedstock can be derived from a cable sheath, a tube, a drive belt, a conveyor belt, a roll covering, a shoe sole, a hose, a sealing member, a profile, a damping element, a coating or a colored or printed article.

The carbon black-containing feedstock can be recovered carbon black and recovered carbon black can be derived from the pyrolysis of tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler.

The carbon black-containing feedstock can be recovered carbon black and recovered carbon black can be derived from the pyrolysis of a cable sheath, a tube, a drive belt, a conveyor belt, a roll covering, a shoe sole, a hose, a sealing member, a profile, a damping element, a coating or a colored or printed article.

The carbon black-containing feedstock can comprise ash (or has an ash content), wherein ash comprise metal, metal compounds, silicon, oxygen, sulphur and/or silica, preferably metal comprises zinc, silicon, calcium, cobalt, manganese, potassium, aluminum, and/or iron.

The carbon black-containing feedstock can comprise ash. The carbon black-containing feedstock can have an ash content in a range of from 0.5 to 25 wt.-%, preferably from 1 to 20 wt.-%, more preferably from 2 to 15 wt.-%, most preferably from 3 to 10 wt.-%, wherein the wt.-% is based on the total weight of the carbon black-containing feedstock and wherein the ash content is determined according to ASTM D 1506-15 at 550 °C, 16 h.

The ash can be embedded in the carbon black of the carbon black-containing feedstock, attached to the carbon black of the carbon black-containing feedstock, attached on the surface of the carbon black of the carbon black-containing feedstock, and/or associated in the carbon black of the carbon black-containing feedstock. The ash can be embedded in the carbon of the carbon black-containing feedstock, attached to the carbon of the carbon black-containing feedstock, attached on the surface of the carbon of the carbon black-containing feedstock, and/or associated in the carbon of the carbon black-containing feedstock.

The carbon black-containing feedstock can comprise zinc, preferably zinc oxide. The zinc is generally derived from a tire based feedstock used for the vulcanization of the rubber article. The carbon black-containing feedstock can have a zinc content in a range of from 2.0 to 6.0 mass %, preferably from 2.5 to 5.5 mass %, more preferably from 3.0 to 5.0 mass %, most preferably from 3.5 to 4.5 mass %, wherein the zinc content is based on the total mass of carbon black-containing feedstock and wherein the zinc content is preferably determined according to Inductively Coupled Plasma Optical Emission Spectrometry (ICP-OES), more preferably the zinc content is determined as described in the specification.

The analysis of the Zn content can be conducted following method A in ASTM D8371-20 using an ICP-OES (Spectro Arcos III) from SPECTRO Analytical Instruments GmbH (Germany) and a microwave (turboWAVE inert) from MLS Mikrowellen-Labor-Systeme GmbH (Germany). For the sample preparation, 0.3-0.4 g of the material was weighed into a microwave tube with a capacity of 15 cm$^3$ and wetted with 1 ml of pure water (<0.055 $\mu$S/cm). Afterwards, 10 cm$^3$ of concentrated nitric acid ($\geq$65 %) was added to the tube and treated in the microwave. The sample was then measured with ICP-OES.

The zinc (or zinc in form of zinc oxide) is typically embedded in the carbon black of the carbon black-containing feedstock, attached to the carbon black of the carbon black-containing feedstock, attached on the surface of the carbon black of the carbon black-containing feedstock, and/or associated in the carbon black of the carbon black-containing feedstock. The zinc (or zinc in form of zinc oxide) is typically embedded in the carbon of the carbon black-containing feedstock, attached to the carbon of the carbon black-containing feedstock, attached on the surface of the carbon of the carbon black-containing feedstock, and/or associated in the carbon of the carbon black-containing feedstock.

The carbon black-containing feedstock can comprise silicon, preferably silica. The carbon black-containing feedstock can have a silicon (Si) content in a range of from 1.0 to 5.0 wt.-%, preferably from 1.8 to 4.5 wt.-%, more preferably from 2.0 to 4.0 wt.-%, most preferably from 2.2 to 4.5 wt.-%, wherein the wt.-% is based on the total weight of the carbon black-containing feedstock and wherein the silicon content is preferably determined by to Inductively Coupled Plasma Optical Emission Spectrometry (ICP-OES), more preferably the silicon content is determined as described in the specification.

The silica (or silicon in form of silica) is typically embedded in the carbon black of the carbon black-containing feedstock, attached to the carbon black of the carbon black-containing feedstock, attached on the surface of the carbon black of the carbon black-containing feedstock, and/or associated in the carbon black of the carbon black-containing feedstock. The silica (or silicon in form of silica) is typically embedded in the carbon of the carbon black-containing feedstock, attached to the carbon of the carbon black-containing feedstock, attached on the surface of the carbon of the carbon black-containing feedstock, and/or associated in the carbon of the carbon black-containing feedstock.

The analysis of the Si content was conducted using an ICP-OES (iCAP 6300) from Thermo Fisher (USA) and a microwave (turboWAVE inert) from MLS Mikrowellen-Labor-Systeme GmbH (Germany). For the analysis of the Si content method A in ASTM D8371-20 was followed. However, a combination of concentrated nitric acid ($\geq$65 %) and concentrated hydrofluoric acid (~ 49%) (usually in a volume ratio of 1:1) with microwave treatment was used to completely digest the sample with microwave treatment. The digested sample is diluted with distilled water to a suitable concentration. The sample was measured with ICP-OES, whereby the device is equipped with a sample introduction kit suitable for HF. In ICP-OES, silicon can be measured with two wavelengths of 288.158 nm and 251.611 nm, preferably measured at 288.158 nm. A standard, such as a commercial standard solution (1,000 g/L Si in nitric acid (1 mol/L) with 2wt.-% HF commercially available from Bernd kraft GmbH (Germany) is measured for calibration. For the measurement of a rubber containing material, the ash obtained according to ASTM D 1506-15 at 550 °C, 16 h is used for the analysis of the Si content.

The carbon black-containing feedstock can have a sulfur content in a range of from 1.0 to 4.0 wt.-%, preferably from 2.0 to 4.0 wt.-%, more preferably from 2.0 to 3.0 wt.-%, wherein the wt.-% is based on the total weight of the carbon black-containing feedstock and wherein the sulfur content is determined by elemental analysis as described in the specification.

The carbon black-containing feedstock generally comprises carbon black. The carbon black-containing feedstock (i) can comprise at least 50 wt.-% carbon black, preferably at least 60 wt.-% carbon black, more preferably at least 70 wt.-% carbon black, even more preferably at least 80 wt.-% carbon black, and most preferably at least 90 wt.-% carbon black, based on the total weight of the carbon black-containing feedstock, and/or (ii) can comprise 50 to 95 wt.-% carbon black, preferably 50 to 90 wt.-% carbon black, more preferably 65 to 87 wt.-% carbon black, more preferably 70 to 85 wt.-% carbon black, and most preferably 75 to 80 wt.-% carbon black, based on the total weight of the carbon black-containing feedstock.

The carbon black-containing feedstock can be milled before subjecting to the gasification. For instance, using mechanical (impact) milling, jet milling, ultrasonic milling and/or electrical arc milling, preferably ultrasonic milling.

For the gasification, different particle sizes or particle size distribution can be used. For instance, very low particles sizes such as lower than 5 $\mu$m can be used but also higher particle sizes can be utilized. Low particles sizes can be beneficially used for fluidized bed reactor.

The volume average particle size x50 of the carbon black-containing feedstock can be from 1 to 800 $\mu$m preferably 50 to 500 $\mu$m, more preferably 60 to 400 $\mu$m, and most preferably 70 to 250 $\mu$m, wherein the volume average particle size is preferably measured as described in the specification by dry measurement using laser diffraction.

The volume average particle size x90 of the carbon black-containing feedstock can be from 1 to 800 $\mu$m preferably 50 to 500 $\mu$m, more preferably 60 to 400 $\mu$m, and most preferably 70 to 250 $\mu$m, wherein the volume average particle size is preferably measured as described in the specification by dry measurement using laser diffraction.

The volume average particle size x95 of the carbon black-containing feedstock can be from 1 to 800 $\mu$m preferably 50 to 500 $\mu$m, more preferably 60 to 400 $\mu$m, and most preferably 70 to 250 $\mu$m, wherein the volume average particle size is preferably measured as described in the specification by dry measurement using laser diffraction.

The volume average particle size x99 of the carbon black-containing feedstock can be 1 to 800 $\mu$m preferably 50 to 500 $\mu$m, more preferably 60 to 400 $\mu$m, and most preferably 70 to 250 $\mu$m, wherein the volume average particle size is preferably measured as described in the specification by dry measurement using laser diffraction.

The volume average particle size of the carbon black-containing feedstock can be from 0.3 to 800 $\mu$m, preferably 1 to 600 $\mu$m preferably 50 to 500 $\mu$m, more preferably 60 to 400 $\mu$m, and most preferably 70 to 250 $\mu$m, wherein the volume average particle size is preferably measured as described in the specification by dry measurement using laser diffraction.

The volume average particle size x50 of the carbon black-containing feedstock can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x90 of the carbon black-containing feedstock can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x95 of the carbon black-containing feedstock can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The volume average particle size x99 of the carbon black-containing feedstock can be from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

The particle size of the carbon black-containing feedstock can be from 0.3 to 50 $\mu$m preferably 0.5 to 50 $\mu$m, more preferably 0.8 to 20 $\mu$m, and most preferably 1 to 15 $\mu$m, wherein the particle size is preferably measured as described in the specification by dry measurement using laser diffraction.

The particle size of the obtained treated carbon black can be less than 200 $\mu$m preferably less than 150 $\mu$m, more preferably less than 100 $\mu$m, and most preferably less than 50 $\mu$m, wherein the particle size is preferably measured as described in the specification by dry measurement using laser diffraction.

The particle size distribution can be determined by dry measurement with the measurement system from Sympatec GmbH (Germany) consisting of VIBRI: conveyor unit (by vibration); RODOS: compressed air dispersion; and HELOS BR: measuring unit, laser diffraction. As sample preparation, 0.5 g of the dried material is filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material are recorded. Before each measurement, a background measurement of 15 seconds is recorded to minimize noise. The obscuration range is controlled by the feeding rate with automatic adjustment and the hopper gap in the range of 5-15% using an integral factor of 0.2. The dispersing air pressure is set to 3 bar. Reported values (volume distribution) represent the average of three measurements after the data analysis using a standard analysis model in the instrument software.

It is desired that at least 70 wt.-%, preferably at least 80 wt.-%, more preferably at least 90 wt.-%, most preferably at least 98 wt.-%, of the carbon black-containing feedstock has a particle size of more than 1 mm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the carbon black-containing feedstock has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the carbon black-containing feedstock has a particle size of more than 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the carbon black-containing feedstock has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

In the ASTM D 1511-12 (2017) norm, several sieves are used for the determination of the particle sizes. For instance, the expression "more than 2 to 2.8 mm" means that the mass of the particles present on Sieve No. 10 is in the desired wt.-% range. In other words, Sieve No. 10 has openings of 2000 μm (i.e. 2 mm) so that particles having a particle size of 2000 μm or less are not present on the sieve. Since Sieve No. 7 retains all particles having a particle size of more than 2.8 mm, the weight percentage of the particle fraction having a particle size of more than 2 to 2.8 mm can be easily determined.

It is desired that at least 50 wt.-%, preferably at least 60 wt.-%, more preferably at least 70 wt.-%, most preferably at least 80 wt.-%, of the carbon black-containing feedstock has a particle size of more than 1 to 2 mm, wherein the particle size is measured according to ASTM D 1511-12 (2017).

The particle size distribution of the carbon black-containing feedstock can be measured according to ASTM D 1511-12 (2017) and (a) Sieve No. 10 retains 10 to 70 wt.-%, preferably 15 to 65 wt.-%, more preferably 25 to 60 wt.-%, and most preferably 30 to 55 wt.-% of the carbon black-containing feedstock, and/or (b) Sieve No. 18 retains 1 to 25 wt.-%, preferably 2 to 20 wt.-%, more preferably 4 to 15 wt.-%, and most preferably 5 to 12 wt.-% of the carbon black-containing feedstock, and/or (c) Sieve No. 35 retains 0 to 10 wt.-%, preferably 1 to 8 wt.-%, more preferably 2 to 7 wt.-%, and most preferably 3 to 8 wt.-% of the carbon black-containing feedstock, and/or (d) Sieve No. 60 retains 0 to 10 wt.-%, preferably 1 to 8 wt.-%, more preferably 2 to 7 wt.-%, and most preferably 3 to 7 wt.-% of the rubber granulate, and/or (e) Sieve No. 120 retains 0 to 5 wt.-%, preferably 1 to 4 wt.-%, more preferably 1.5 to 3 wt.-%, and most preferably 2 to 2.5 wt.-% of the carbon black-containing feedstock, and/or (f) Bottom receive pan comprises less than 4 wt.-%, preferably less than 3 wt.-%, more preferably 0 to 2 wt.-%, and most preferably 0.01 to 1 wt.-% of the carbon black-containing feedstock.

The carbon black-containing feedstock can have a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 70 to 150 $m^2$/g.

The carbon black-containing feedstock can have an oil absorption number (OAN) measured according to ASTM D2414-18 in a range from 30 to 350 mL/100 g, preferably from 40 to 300 mL/100 g, more preferably from 50 to 150 mL/100 g, even more preferably from 100 to 290 mL/100 g, most preferably from 40 to 150 mL/100 g.

The carbon black-containing feedstock can have

(a) a BET surface area determined according to ASTM D6556-17 in a range from 40 to 100 $m^2$/g, preferably from 50 to 80 $m^2$/g, more preferably 55 to 70 $m^2$/g, and an oil absorption number (OAN) measured according to ASTM D2414-18 in a range from 150 to 350 mL/100 g, preferably from 200 to 320 mL/100 g, more preferably from 240 to 300 mL/100 g,

(b) a BET surface area determined according to ASTM D6556-17 in a range from 10 to 100 $m^2$/g, preferably from 20 to 90 $m^2$/g, more preferably 25 to 80 $m^2$/g, and an oil absorption number (OAN) measured according to ASTM D2414-18 in a range from 20 to 180 mL/100 g, preferably from 30 to 160 mL/100 g, more preferably from 40 to 150 mL/100 g, and/or

(c) a BET surface area determined according to ASTM D6556-17 in a range from 200 to 600 $m^2$/g, preferably from 250 to 500 $m^2$/g, more preferably 300 to 450 $m^2$/g, and an oil absorption number (OAN) measured according to ASTM D2414-18 in a range from 50 to 150 mL/100 g, preferably from 60 to 120 mL/100 g, more preferably from 70 to 100 mL/100 g.

The carbon black-containing feedstock can have a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g.

The carbon black-containing feedstock can have a volatile content measured at 950°C of 0.01 to 20 wt.-%, such as 1 to 10 wt.-%, 1.5 to 10 wt.-%, 1 to 5 wt.-%, 2 to 10 wt.-%, 2 to 15 wt.-%, 2.5 to 10 wt.-%, 3 to 7 wt.-%, or 3.5 to 7 wt.-%. The volatile content can be measured as described in the specification.

The carbon black-containing feedstock

(i) can have a transmittance of at least 20 %, preferably at least 30 %, more preferably at least 40 %, even more preferably at least 60 %, most preferably at least 80 % wherein the transmittance at 425 nm in toluene is measured according to ASTM D 1618-18 against toluene, and/or
(ii) can have a transmittance of at least 20 %, preferably at least 30 %, more preferably at least 40 %, even more preferably at least 60 %, most preferably at least 80 % wherein the transmittance at 355 nm in toluene is measured according to ASTM D 1618-18 against toluene, wherein the transmittance is measured at 355 nm instead of 425 nm, and/or
(iii) can have a transmittance of at least 20 %, preferably at least 30 %, more preferably at least 40 %, even more preferably at least 60 %, most preferably at least 80 % wherein the transmittance at 300 nm in toluene is measured according to ASTM D 1618-18 against toluene, wherein the transmittance is measured at 300 nm instead of 425 nm.

It is surprisingly found that the transmittance at 300 nm, 355 nm as well as 425 nm can be significantly increase by the gasification of the carbon black-containing feedstock such as recovered carbon black.

The carbon black-containing feedstock can have an oxygen content in a range of from 1.0 to 3.0 wt.-%, preferably from 1.5 to 3.0 wt.-%, more preferably from 1.5 to 2.5 wt.-%, wherein the wt.-% is based on the total weight of the carbon black-containing feedstock and wherein the oxygen content is determined by elemental analysis as described in the specification.

The carbon black-containing feedstock can have a sulfur content in a range of from 1.0 to 4.0 wt.-%, preferably from 2.0 to 4.0 wt.-%, more preferably from 2.0 to 3.0 wt.-%, wherein the wt.-% is based on the total weight of the carbon black-containing feedstock and wherein the sulfur content is determined by elemental analysis as described in the specification.

Generally, treated carbon black is obtained after the gasification.

The treated carbon black can have a coke content below 15 wt.-%, preferably below 10 wt.-%, more preferably below 5 wt.-%, and most preferably below 1 wt.-%, based on the total weight of treated carbon black that is obtained after the gasification.

The treated carbon black comprises less impurities compared to recovered carbon black. Even if multiple measurements exists for the measurements of carbon-containing impurities, the information on purity is different.

For instance, carbon blacks can in particular contain organic compounds as impurities that have a skeleton with a polycyclic aromatic structure, which are commonly referred to as polycyclic aromatic hydrocarbons (PAHs). PAHs are believed to be harmful to the health and environment as for example discussed in Sudip K. Samanta, Om V. Singh and Rakesh K. Jain: "Polycyclic aromatic hydrocarbons: environmental pollution and bioremediation", TRENDS in Biotechnology, Vol. 20, No. 6, Jun. 2002, pages 243-248. Therefore, the PAH content of carbon blacks is subject to increasingly demanding customer needs and official regulations for applications such as use in food or beverage contact situations, pharmaceuticals, cosmetics, or the manufacture of toys and articles for children. For instance, the American Food and Drug Administration (FDA) has limited the total PAH content of high purity furnace blacks in goods with food contact to 0.5 ppm (cf. U.S. Code of Federal Regulations (CFR) 21 Sec.178.3297), whereby the PAH content is defined as the sum of 22 PAH compounds (PAH22 content).

However, even if the PAH22 content is low, the measurement of the transmittance at 425 nm in toluene measured according to ASTM D 1618-18 against toluene can still reveal that a significant amount of impurities is still present (low transmittance). Moreover, a high transmittance at 425 nm, such as more than 90 %, does not mean that only a negligible amount of organic impurities is present on the respective carbon black. The transmittance at lower wavelengths, such as 300 nm or 355 nm, may reveal that the carbon black comprises a high amount of organic impurities. For instance, a commercial rCB A2 was measured to have a transmittance at 425 nm in toluene measured according to ASTM D 1618-18 against toluene of 99.7 % but a transmittance at 300 nm in toluene measured according to ASTM D 1618-18 against toluene of 9.5 %. In comparison, a treated carbon black according to the invention has a transmittance at 425 nm in toluene measured according to ASTM D 1618-18 against toluene of 99.9 % and a transmittance at 300 nm in toluene measured according to ASTM D 1618-18 against toluene of 94.5 %. It should be noted that in each case, the carbon black containing feedstock was heat treated and it was surprising that only after the gasification, the transmittance at 300 nm in toluene measured according to ASTM D 1618-18 against toluene was very high.

Accordingly, the treated carbon black can have a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene. The treated carbon black can have a transmittance of at least 80 %, preferably at least 85 %, more preferably at least 90 %, even more preferably at least 95 %, most preferably at least 98 %, wherein the transmittance at 355 nm in toluene is measured according to ASTM D 1618-18 against toluene, wherein the transmittance is measured at 355 nm instead of 425 nm. The treated carbon black can have a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

It is preferred that the treated carbon black has a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and a transmittance of at least 80 %, preferably at least 85 %, more preferably at least 90 %, even more preferably at least 95 %, most preferably at least 98 %, wherein the transmittance at 300 nm in toluene is measured according to ASTM D 1618-18 against toluene, wherein the transmittance is measured at 300 nm instead of 425 nm.

The MOAH and MOSH/POSH values indicate the organic impurities of the carbon black. Again, the mere pyrolysis to obtain rCB (heat treatment) does not sufficiently reduce the organic impurities measured according to MOSH and MOSH/POSH.

The treated carbon black can have a MOAH value of below 500 mg/kg, preferably below 300 mg/kg, more preferably below 250 mg/kg, and most preferably below 200 mg/kg, determined as described in the specification.

The treated carbon black can have a MOSH/POSH value of below 900 mg/kg, preferably below 500 mg/kg, more preferably below 300 mg/kg, even more preferably below 150 mg/kg and most preferably below 100 mg/kg, determined as described in the specification.

The treated carbon black can have an iodine adsorption number of 30 to 80 mg/g, preferably 40 to 70 mg/g, more preferably 45 to 65 mg/g, the iodine adsorption number is measured according to ASTM D1510-17.

The treated carbon black can have a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g. Preferably, the statistical thickness surface area (STSA) determined according to ASTM D6556-17 of the treated carbon black is higher than the statistical thickness surface area (STSA) determined according to ASTM D6556-17 of the particulate carbon black-containing feedstock.

The treated carbon black can have a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 60 to 150 $m^2$/g. Preferably, BET surface area determined according to ASTM D6556-17 of the treated carbon black is higher than the BET surface area determined according to ASTM D6556-17 of the particulate carbon black-containing feedstock.

The treated carbon black can have a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The obtained treated carbon black after the gasification can have (a) a BET surface area determined according to ASTM D6556-17 in a range from 40 to 100 $m^2$/g, preferably from 50 to 80 $m^2$/g, more preferably 55 to 70 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, (b) a BET surface area determined according to ASTM D6556-17 in a range from 10 to 100 $m^2$/g, preferably from 20 to 90 $m^2$/g, more preferably 25 to 80 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or (c) a BET surface area determined according to ASTM D6556-17 in a range from 200 to 600 $m^2$/g, preferably from 250 to 500 $m^2$/g, more preferably 300 to 450 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

The treated carbon black can have a volatile content measured at 950°C of 0.1 to 10 wt.-%, such as 0.3 to 10 wt.-%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%. The volatile content can be measured as described in the specification.

The volume average particle size x50 of the obtained treated carbon black, preferably before milling, can be from 1 to 800 μm, preferably 10 to 150 μm, more preferably 30 to 100 μm, and most preferably 35 to 60 μm, wherein the volume average particle size is preferably measured as described in the specification by dry measurement using laser diffraction.

The volume average particle size x90 of the obtained treated carbon black, preferably before milling, can be from 1 to 800 μm, preferably 10 to 150 μm, more preferably 30 to 100 μm, and most preferably 35 to 60 μm, wherein the volume average particle size is preferably measured as described in the specification by dry measurement using laser diffraction.

The volume average particle size x95 of the obtained treated carbon black, preferably before milling, can be from 300 nm to 800 μm, preferably 500 nm to 150 μm, more preferably 800 nm to 100 μm, and most preferably 1 to 20 μm, wherein the volume average particle size is preferably measured as described in the specification by dry measurement using laser diffraction.

The volume average particle size x99 of the obtained treated carbon black, preferably before milling, can be from 300 nm to 800 μm, preferably 500 nm to 150 μm, more preferably 800 nm to 100 μm, and most preferably 1 to 20 μm,

wherein the volume average particle size is preferably measured as described in the specification by dry measurement using laser diffraction.

The particle size of the obtained treated carbon black, preferably before milling, can be from 1 to 800 μm, preferably 10 to 150 μm, more preferably 30 to 100 μm, and most preferably 35 to 60 μm, wherein the particle size is preferably measured as described in the specification by dry measurement using laser diffraction.

The particle size of the obtained treated carbon black stock, preferably before milling, can be less than 800 μm, preferably less than 500 μm, more preferably less than 300 μm, and most preferably less than 200 μm, wherein the particle size is preferably measured as described in the specification by dry measurement using laser diffraction.

It is desired that at least 70 wt.-%, preferably at least 80 wt.-%, more preferably at least 90 wt.-%, most preferably at least 98 wt.-%, of the obtained treated carbon black, preferably before milling, has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the obtained treated carbon black, preferably before milling, has a particle size of more than 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the obtained treated carbon black, preferably before milling, has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the obtained treated carbon black, preferably before milling, has a particle size of more than 1 to 2 mm, wherein the particle size is measured according to ASTM D 1511-12 (2017).

The particle size distribution of the obtained treated carbon black, preferably before milling, can be measured according to ASTM D 1511-12 (2017) and (a) Sieve No. 10 retains 10 to 70 wt.-%, preferably 15 to 65 wt.-%, more preferably 25 to 60 wt.-%, and most preferably 30 to 55 wt.-% of the obtained treated carbon black, and/or (b) Sieve No. 18 retains 1 to 25 wt.-%, preferably 2 to 20 wt.-%, more preferably 4 to 15 wt.-%, and most preferably 5 to 12 wt.-% of the obtained treated carbon black, and/or (c) Sieve No. 35 retains 0 to 10 wt.-%, preferably 1 to 8 wt.-%, more preferably 2 to 7 wt.-%, and most preferably 3 to 8 wt.-% of the obtained treated carbon black, and/or (d) Sieve No. 60 retains 0 to 10 wt.-%, preferably 1 to 8 wt.-%, more preferably 2 to 7 wt.-%, and most preferably 3 to 7 wt.-% of the obtained treated carbon black, and/or (e) Sieve No. 120 retains 0 to 5 wt.-%, preferably 1 to 4 wt.-%, more preferably 1.5 to 3 wt.-%, and most preferably 2 to 2.5 wt.-% of the obtained treated carbon black, and/or (f) Bottom receive pan comprises less than 4 wt.-%, preferably less than 3 wt.-%, more preferably 0 to 2 wt.-%, and most preferably 0.01 to 1 wt.-% of the obtained treated carbon black.

It has surprisingly been found that the obtained treated carbon black after the gasification can be milled more easily compared to non-de-coked material.

The obtained treated carbon black can be milled. For instance, using mechanical (impact) milling, jet milling, ultrasonic milling and/or electrical arc milling, preferably ultrasonic milling. The desired particle sizes can be obtained after milling the obtained treated carbon black. Accordingly, the below mentioned particle sizes and particle size distributions of the treated carbon black can be obtained after the milling.

It is preferred that the volume average particle size of the carbon black-containing feedstock is higher than the volume average particle size of the obtained treated carbon black, wherein the volume average particle size is preferably measured as described in the specification by dry measurement using laser diffraction.

It is preferred that the volume average particle size of the particulate carbon black-containing feedstock is higher than the volume average particle size of the obtained treated carbon black, wherein the volume average particle size is preferably measured as described in the specification by dry measurement using laser diffraction.

The volume average particle size x50 of the obtained treated carbon black can be from 0.3 to 50 μm, preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x90 of the obtained treated carbon black can be from 0.3 to 50 μm, preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x95 of the obtained treated carbon black can be from 0.3 to 50 μm, preferably 0.5 to 50 μm, more preferably 0.8 to 20 μm, and most preferably 1 to 10 μm, wherein the volume average particle size is preferably measured as described in the specification by dry measurement using laser diffraction.

The volume average particle size x99 of the obtained treated carbon black can be from 0.3 to 50 μm, preferably 0.5 to 50 μm, more preferably 0.8 to 20 μm, and most preferably 1 to 10 μm, wherein the volume average particle size is preferably measured as described in the specification by dry measurement using laser diffraction.

The particle size of the obtained treated carbon black can be from 0.3 to 50 $\mu$m preferably 0.5 to 50 $\mu$m, more preferably 0.8 to 20 $\mu$m, and most preferably 1 to 10 $\mu$m, wherein the particle size is preferably measured as described in the specification by dry measurement using laser diffraction.

The particle size of the obtained treated carbon black can be less than 200 $\mu$m preferably less than 150 $\mu$m, more preferably less than 100 $\mu$m, and most preferably less than 50 $\mu$m, wherein the particle size is preferably measured as described in the specification by dry measurement using laser diffraction.

The treated carbon black can comprise ash, wherein ash comprise metal, metal compounds, silicon, oxygen, sulphur and/or silica, preferably metal comprises zinc, silicon, calcium, cobalt, manganese, potassium, aluminum, and/or iron.

The treated carbon black can have an ash content in a range of from 3 to 50 wt.-%, preferably from 10 to 40 wt.-%, more preferably from 10 to 35 wt.-%, most preferably from 15 to 30 wt.-%, wherein the wt.-% is based on the total weight of the treated carbon black and wherein the ash content is determined according to ASTM D 1506-15 at 550 °C, 16 h. It is desired that the ash content determined according to ASTM D 1506-15 at 550 °C, 16 h, of the treated carbon black is higher compared to the ash content determined according to ASTM D 1506-15 at 550 °C, 16 h, of the particulate carbon black-containing feedstock. It is believed that the particulate carbon black-containing feedstock is de-coked during the gasification so that the overall carbon content is lower in the treated carbon black so that the relative ash content based on the total weight of the treated carbon black is higher.

The treated carbon black can have a C (carbon) content of 50 wt.-% or more, preferably 60 wt.-% or more, more preferably 65 to 90 wt.-%, even more preferably 65 wt.-% to 80 wt.-%, and most preferably 70 to 75 wt.-%, determined as described in the specification.

The treated carbon black can have a H (hydrogen) content of less than 2 wt.-%, preferably less than 1.2 wt.-%, more preferably less than 0.8 wt.-%, even more preferably less than 0.5 wt.-%, and most preferably 0.01 to 0.3 wt.-%, determined as described in the specification.

The treated carbon black can have a H (hydrogen) to C (carbon) ratio of 0.001 to 0.3, preferably 0.005 to 0.2, more preferably 0.01 to 0.1, even more preferably 0.02 to 0.06, and most preferably 0.02 to 0.04, wherein the C and H content are determined as described in the specification.

The gasification of a carbon black-containing feedstock comprising coke at a temperature of 730 °C to 950 °C can be used to increase the cumulative pore volume for pore sizes of 0.3 to 1.5 nm of the obtained treated carbon black with respect to the cumulative pore volume for pore sizes of 0.3 to 1.5 nm of the carbon black-containing feedstock, wherein the cumulative pore volume is determined as mentioned in the specification.

The treated carbon black can have a cumulative pore volume for pore sizes of 0.3 to 1.5 nm of 0.015 to 0.050 cm$^3$/g, preferably 0.018 to 0.045 cm$^3$/g, more preferably 0.020 to 0.040 cm$^3$/g, even more preferably 0.021 to 0.035 cm$^3$/g, and most preferably 0.023 to 0.034 cm$^3$/g, wherein the cumulative pore volume is determined as mentioned in the specification.

The treated carbon black can have a cumulative pore volume for pore sizes of 0.3 to 0.75 nm of 0.008 to 0.035 cm$^3$/g, preferably 0.009 to 0.025 cm$^3$/g, more preferably 0.0101 to 0.020 cm$^3$/g, even more preferably 0.011 to 0.0185 cm$^3$/g, and most preferably 0.011 to 0.015 cm$^3$/g, wherein the cumulative pore volume is determined as mentioned in the specification.

The treated carbon black can have a cumulative pore volume for pore sizes of 0.3 to 0.70 nm of 0.008 to 0.035 cm$^3$/g, preferably 0.009 to 0.025 cm$^3$/g, more preferably 0.0101 to 0.020 cm$^3$/g, even more preferably 0.011 to 0.0185 cm$^3$/g, and most preferably 0.011 to 0.015 cm$^3$/g, wherein the cumulative pore volume is determined as mentioned in the specification.

The treated carbon black can be used to provide a rubber article. Examples of rubber articles include, but are not limited to, tires, conveyer belts, gaskets, such as door gaskets, drive belts, floor mats, shoe soles, belts, cable sheaths, hoses, and the like. Thus, a rubber article comprising the treated carbon black is provided. It is preferred that the rubber article is a tire.

A rubber composition is further provided for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a drive belt, a conveyor belt, a roll covering, a shoe sole, a hose, a sealing member, a profile, a damping element, a coating or a colored or printed article.

The tire may comprise a tire tread, a belt, a belt reinforcement, a carcass, a carcass reinforcement, a sidewall, inner liner, apex, shoulder, hump strip, chafer and a bead filler, wherein at least one of the foregoing is made of or comprises a rubber composition according to the invention. Such tires include for example, without being limited thereto, truck tires, passenger tires, off-road tires, aircraft tires, agricultural tires, and earth-mover tires.

Preferably, the tire has a circumferential tread of a cap/base configuration comprising a comprising a circumferential outer tread cap rubber layer which contains a running surface for the tire and a tread base rubber layer at least partially underlaying said tread cap rubber layer, wherein at least one of said tread cap rubber layer and said tread base rubber layer is made of or comprises a rubber composition according to the present invention.

The present invention further relates to an article made of or comprising the rubber composition being a cable sheath, a tube, a drive belt, a conveyor belt, a roll covering, a shoe sole, a hose, a sealing member, a profile, a damping element, a coating or a colored or printed article.

The invention further relates to a plastic composition. The plastic composition comprises at least one plastic material and at least one carbon black of the present invention.

The at least one plastic material may comprise a thermoplastic polymer, a thermosetting polymer, a thermoplastic elastomer, preferably low and high density polyethylene and polypropylene, polyvinyl chloride, melamine-formaldehyde resin, phenolic resin, epoxy resin, polyamide, polyester, polyoxymethylene, polymethyl methacrylate, polycarbonate, polystyrene, polyurethane, polyphenylene oxide, polysiloxane, polyacryloamide, polyaryletherketone, polysulfone, polyetherimide, acrylonitrile styrene acrylate or acrylonitrile butadiene styrene polymer and mixtures or co-polymers of any of the foregoing.

The process according to the invention can further comprise the pyrolysis of particulate carbon black-containing feedstock before the gasification. The temperature for the pyrolysis can be chosen as desired. For instance, the pyrolysis can be done in a furnace reactor. In other words, the inventive method can further comprise a step for the production of carbon black in a furnace reactor before the gasification. The produced carbon black can then be subjected to the gasification. For instance, a rubber granulate (preferably comprising carbon black) can be subjected into the furnace reactor to produce virgin carbon black and preferably obtaining rCB as well. The temperature for the reaction in the furnace reactor can be from 360 °C to 2000 °C, such as 800 to 1500 °C, 900 to 1200 °C.

The process according to the invention can further comprise the pyrolysis of particulate carbon black-containing feedstock before the gasification, wherein preferably pyrolysis of particulate carbon black-containing feedstock comprises the pyrolysis of particulate carbon black-containing feedstock at a temperature of 300 °C to 710 °C (alternatively 300 to 750 °C or 450 °C to 710 °C) and in the absence of oxygen, wherein a pyrolysis gas stream and a pyrolysis carbon black-containing particulate is obtained.

The temperature for the pyrolysis can be from 360 °C to 2000 °C, such as 800 to 1500 °C, 900 to 1200 °C. A very high temperature is particularly preferred for a pyrolysis in a furnace reactor (entrained flow reactor). Rubber granulate (particular rubber granulate that comprises carbon black) that is injected in a furnace reactor can be used to manufacture virgin carbon black (derived from the rubber content) and to recover carbon black that is present in the rubber granulate feedstock.

The pyrolysis can be carried out in separate processes. For instance, the pyrolysis can be carried out in rotary kiln, screw reactor, a furnace reactor (entrained flow reactor), rotary kiln, auger, fixed bed, and/or moving bed reactor. The obtained pyrolyzed carbon black-containing particulate, i.e. the carbon black-containing feedstock, is then subjected to the gasification. The gasification can be carried out in a fluidized bed reactor, auger reactor, batch reactor, fixed bed reactor, electric furnace and/or rotary kiln. Accordingly, the pyrolysis can be carried out in a first reactor and the gasification can be carried out in a second reactor, wherein the first reactor and the second reactor are different reactors.

The process for the pyrolysis of the carbon black containing feedstock, such as grubber granulate, in a furnace reactor is described in the examples.

It is also possible that the pyrolysis and gasification are carried out as a continuous process, wherein the material after the pyrolysis is subjected directly to the gasification, i.e. both processes are carried out in one reactor.

The pyrolysis of particulate carbon black-containing feedstock can be carried out in an inert atmosphere, preferably in a nitrogen atmosphere. The pyrolysis of the particulate carbon black-containing feedstock can be carried out in an inert atmosphere, preferably in a hydrogen atmosphere. In this context, atmosphere should refer to the gaseous environment in which the material, such as the particulate carbon black-containing feedstock, is treated.

Pyrolysis can be carried out in a reaction chamber and the oxygen content (in forms of $O_2$) in the reaction chamber should be less than 10000 ppm, preferably 1000 ppm, based on the total weight of the atmosphere in the reaction chamber. It is particularly preferred that no oxygen is present in the reaction chamber for the pyrolysis. It is particularly preferred that no oxygen is supplied into the reaction chamber for the pyrolysis.

During the pyrolysis a pyrolysis gas is generally obtained. The pyrolysis gas stream can be used to at least partially heat the pyrolysis process and/or the gasification process. For instance, the pyrolysis gas comprises hydrogen. The hydrogen or the pyrolysis gas can be used as fuel for a burner to at least partially heat the pyrolysis process and/or the gasification process. Accordingly, a sustainable pyrolysis process can be achieved.

The pyrolysis of particulate carbon black-containing feedstock can be carried out at a temperature of 350 °C to 700 °C, preferably 400 to 680 °C, more preferably 450 to 650 °C, and most preferably 500 to 600 °C. The temperature during the pyrolysis should be controlled so that no gasification takes place. Generally, a temperature of 730 °C or more is necessary for the gasification.

The pyrolysis of particulate carbon black-containing feedstock can be carried out at an absolute pressure of 0.5 to 2 bar, preferably 0.7 to 1.5 bar, more preferably 0.8 to 1.3 bar, and most preferably 0.9 to 1.1 bar. Accordingly, the reactor for the pyrolysis (and/or gasification) can be or comprises a pressure vessel.

It is desired that the residence time of the particulate carbon black-containing feedstock for the pyrolysis (a) is as low as possible. This means that the heat transfer should be high that can be achieved by decreasing the particle size of the particulate carbon black-containing feedstock or by decreasing the bed depth in the reactor. The bed depth refers to the height of the material to be treated in the reactor. For instance, a lower bed depth results in a better heat transfer and thus, the pyrolysis is more effective. Generally, material that is not moved or conveyed in a reactor is not considered for the bed depth. Material that does not move or is transported refers to the dead bed depth of a reactor. The dead bed depth is usually 1 to 6 cm, such as 2 to 5 cm. Accordingly, the bed depth can be alternatively expressed as the moving bed depth.

The bed depth of the particulate carbon black-containing feedstock can be from 0.5 to 10 cm, preferably 1 to 5 cm, more preferably 1 to 3 cm, and most preferably 1.5 to 2.5 cm. The average bed depth of the particulate carbon black-containing feedstock can be from 0.5 to 10 cm, preferably 1 to 5 cm, more preferably 1 to 3 cm, and most preferably 1.5 to 2.5 cm. The bed depth of the particulate carbon black-containing feedstock in the pyrolysis zone can be from 0.5 to 10 cm, preferably 1 to 5 cm, more preferably 1 to 3 cm, and most preferably 1.5 to 2.5 cm. The bed average depth of the particulate carbon black-containing feedstock in the pyrolysis zone can be from 0.5 to 10 cm, preferably 1 to 5 cm, more preferably 1 to 3 cm, and most preferably 1.5 to 2.5 cm. The bed depth of the particulate carbon black-containing feedstock in the gasification zone can be from 0.5 to 10 cm, preferably 1 to 5 cm, more preferably 1 to 3 cm, and most preferably 1.5 to 2.5 cm. The bed average depth of the particulate carbon black-containing feedstock in the gasification zone can be from 0.5 to 10 cm, preferably 1 to 5 cm, more preferably 1 to 3 cm, and most preferably 1.5 to 2.5 cm.

The residence time of the particulate carbon black-containing feedstock for the pyrolysis or for the gasification generally refers to the average residence time. Particularly, the residence time and the average residence time for the pyrolysis or for the gasification refers to the residence time of the particulate carbon black-containing feedstock of the material is transported or that is moving. The residence time usually does not consider material that is not moving.

The residence time of the particulate carbon black-containing feedstock for the pyrolysis (a) can be from 5 to 60 min, preferably 6 to 40 min, more preferably 6 to 25 min, and most preferably 7 to 15 min.

The residence time of the particulate carbon black-containing feedstock for the gasification (b) can be from 20 min to 4 h, preferably 1 h to 2.5 h, more preferably 2 h to 2.5 h.

The particulate carbon black-containing feedstock can be heated to the required temperature for the pyrolysis (a) by using an electrical heating unit. The electrical heating unit can heat an inert gas stream, such as a nitrogen gas stream, to the required temperature and the heated inert gas stream, such as a nitrogen gas stream, is subjected to the particulate carbon black-containing feedstock for the pyrolysis.

The atmosphere during the pyrolysis for the particulate carbon black-containing feedstock can comprise nitrogen, preferably at least 20 vol.-% nitrogen, such as at least 25 vol.-% nitrogen, at least 30 vol.-% nitrogen, at least 40 vol.-% nitrogen, at least 50 vol.-% nitrogen, or at least 60 vol.-% nitrogen, based on the total volume of the atmosphere during the pyrolysis. During the pyrolysis of the particulate carbon black-containing feedstock, the feedstock can be subjected with nitrogen (or nitrogen gas), such as heated nitrogen (or heated nitrogen gas), wherein the nitrogen (or nitrogen gas) preferably comprises at least 30 vol.-% nitrogen, such as at least 40 vol.-% nitrogen, at least 50 vol.-% nitrogen, at least 60 vol.-% nitrogen, at least 70 vol.-% nitrogen, or at least 80 vol.-% nitrogen, based on the total volume of the nitrogen (or nitrogen gas).

The atmosphere during the pyrolysis for the particulate carbon black-containing feedstock can comprise hydrogen, preferably at least 10 vol.-% hydrogen, such as at least 20 vol.-% hydrogen, at least 25 vol.-% hydrogen, at least 30 vol.-% hydrogen, at least 40 vol.-% hydrogen, at least 50 vol.-% hydrogen, or at least 60 vol.-% hydrogen, based on the total volume of the atmosphere during the pyrolysis. During the pyrolysis of the particulate carbon black-containing feedstock, the feedstock can be subjected with hydrogen (or hydrogen gas), such as heated hydrogen (or heated hydrogen gas), wherein the hydrogen (or hydrogen gas) preferably comprises at least 30 vol.-% hydrogen, such as at least 40 vol.-% hydrogen, at least 50 vol.-% hydrogen, at least 60 vol.-% hydrogen, at least 70 vol.-% hydrogen, or at least 80 vol.-% hydrogen, based on the total volume of the hydrogen (or hydrogen gas).

Thus, the pyrolysis can be carried out by subjecting the particulate carbon black-containing feedstock with heated nitrogen to provide the desired temperature.

The atmosphere during the pyrolysis for the particulate carbon black-containing feedstock can comprise less than 20 mol.-% $H_2O$, such as less than 15 mol.-% $H_2O$, less than 10 mol.-% $H_2O$, less than 5 mol.-% $H_2O$, less than 3 mol.-% $H_2O$, less than 2 mol.-% $H_2O$, or less than 1 mol.-% $H_2O$, based on the total volume of the atmosphere during the pyrolysis. In other words, it is possible that water is present during the pyrolysis but it is intended that the water content is as low as possible. For instance, in a continuous process, water for the gasification or $CO_2$ for the gasification is removed from the atmosphere so that no water or no $CO_2$ is present during the pyrolysis. However, it is possible that residues of the water or $CO_2$ are still present.

The atmosphere during the pyrolysis for the particulate carbon black-containing feedstock can comprise less than less than 5 mol.-% $O_2$, such as less than 4 mol.-% $O_2$, less than 2 mol.-% $O_2$, less than 1 mol.-% $O_2$, less than 0.5 mol.-% $O_2$, less than 0.2 mol.-% $O_2$, or less than 0.1 mol.-% $O_2$, based on the total volume of the atmosphere during the pyrolysis.

The expression "x50" or "x(number)" means a percentile of an average distribution (alternatively the expression "D50" or "D(number) can be used). Accordingly, x50 = 100 μm means that 50% of the sample is smaller than the indicated value 100 μm.

The volume average particle size x50 of the particulate carbon black-containing feedstock can be from 1 to 800 μm, preferably 10 to 150 μm, more preferably 30 to 100 μm, and most preferably 35 to 60 μm, wherein the volume average particle size is preferably measured as described in the specification by dry measurement using laser diffraction.

The volume average particle size x90 of the particulate carbon black-containing feedstock can be from 1 to 800 μm, preferably 10 to 150 μm, more preferably 30 to 100 μm, and most preferably 35 to 60 μm, wherein the volume average particle size is preferably measured as described in the specification by dry measurement using laser diffraction.

The volume average particle size x95 of the particulate carbon black-containing feedstock can be from 300 nm to 800 μm, preferably 500 nm to 150 μm, more preferably 800 nm to 100 μm, and most preferably 1 to 20 μm, wherein the volume average particle size is preferably measured as described in the specification by dry measurement using laser diffraction.

The volume average particle size x99 of the particulate carbon black-containing feedstock can be from 300 nm to 800 μm, preferably 500 nm to 150 μm, more preferably 800 nm to 100 μm, and most preferably 1 to 20 μm, wherein the volume average particle size is preferably measured as described in the specification by dry measurement using laser diffraction.

The particle size of the particulate carbon black-containing feedstock can be from 1 to 800 μm, preferably 10 to 150 μm, more preferably 30 to 100 μm, and most preferably 35 to 60 μm, wherein the particle size is preferably measured as described in the specification by dry measurement using laser diffraction.

The particle size of the particulate carbon black-containing feedstock can be less than 800 μm, preferably less than 500 μm, more preferably less than 300 μm, and most preferably less than 200 μm, wherein the particle size is preferably measured as described in the specification by dry measurement using laser diffraction.

It is desired that at least 70 wt.-%, preferably at least 80 wt.-%, more preferably at least 90 wt.-%, most preferably at least 98 wt.-%, of the particulate carbon-containing feedstock has a particle size of more than 2 mm, wherein the particle size is measured according to ASTM D 1511-12 (2017).

It is desired that at least 50 wt.-%, preferably at least 60 wt.-%, more preferably at least 70 wt.-%, most preferably at least 80 wt.-%, of the particulate carbon-containing feedstock has a particle size of more than 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the particulate carbon-containing feedstock has a particle size of more than 2 to 2.8 mm, wherein the particle size is measured according to ASTM D 1511-12 (2017) using an additional U.S. Standard Sieves or equivalent, conforming to Specification ASTM E11, Sieve Nos. 7, having openings of 2800 μm. The sieves shall be 25 mm in height and 200 mm in diameter.

It is desired that at least 50 wt.-%, preferably at least 60 wt.-%, more preferably at least 70 wt.-%, most preferably at least 80 wt.-%, of the particulate carbon-containing feedstock has a particle size of more than 1 to 2 mm, wherein the particle size is measured according to ASTM D 1511-12 (2017).

The particle size distribution of the particulate carbon-containing feedstock can be measured according to ASTM D 1511-12 (2017) and (a) Sieve No. 10 retains 10 to 70 wt.-%, preferably 15 to 65 wt.-%, more preferably 25 to 60 wt.-%, and most preferably 30 to 55 wt.-% of the particulate carbon-containing feedstock, and/or (b) Sieve No. 18 retains 1 to 25 wt.-%, preferably 2 to 20 wt.-%, more preferably 4 to 15 wt.-%, and most preferably 5 to 12 wt.-% of the particulate carbon-containing feedstock, and/or (c) Sieve No. 35 retains 0 to 10 wt.-%, preferably 1 to 8 wt.-%, more preferably 2 to 7 wt.-%, and most preferably 3 to 8 wt.-% of the particulate carbon-containing feedstock, and/or (d) Sieve No. 60 retains 0 to 10 wt.-%, preferably 1 to 8 wt.-%, more preferably 2 to 7 wt.-%, and most preferably 3 to 7 wt.-% of the particulate carbon-containing feedstock, and/or (e) Sieve No. 120 retains 0 to 5 wt.-%, preferably 1 to 4 wt.-%, more preferably 1.5 to 3 wt.-%, and most preferably 2 to 2.5 wt.-% of the particulate carbon-containing feedstock, and/or (f) Bottom receive pan comprises less than 4 wt.-%, preferably less than 3 wt.-%, more preferably 0 to 2 wt.-%, and most preferably 0.01 to 1 wt.-% of the particulate carbon-containing feedstock.

The invention will now be described with reference to the accompanying figures (FIGs) which do not limit the scope and ambit of the invention. The description provided is purely by way of example and illustration. However, specific features exemplified in the figures can be used to further restrict the scope of the invention and claims.

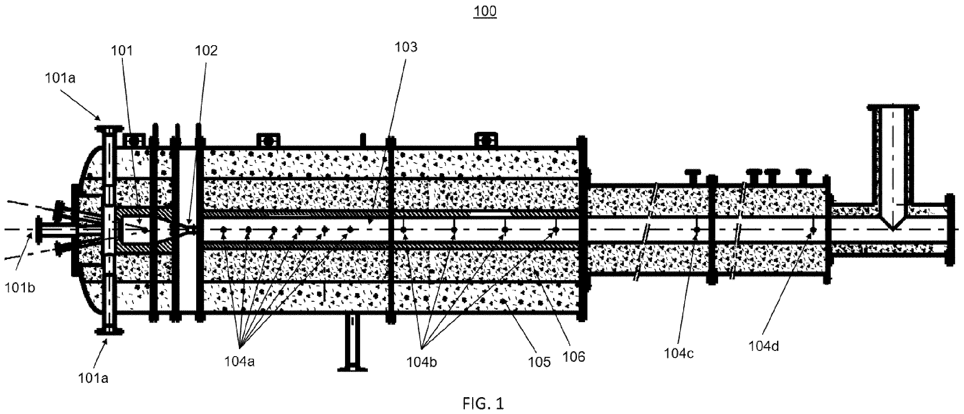

In FIG. 1 a furnace reactor (100) is shown that comprises a combustion chamber (101), a choke (102) and a tunnel (103). The reactor has an inner lining (106) as well as an outer lining (105). The combustion chamber (101) comprises means to inject a fuel (101b) and oxygen-containing gas (101a). In the figure, the oxygen-containing gas is injected into the combustion chamber (101) tangential or radial via oxygen containing gas means (101a) and the fuel is injected into the combustion chamber (101) axial via fuel injection means (101b). It is preferred that the oxygen-containing gas is preheated to a temperature described in the description. It is possible to adjust the temperature of the hot gas flow with the preheating of the oxygen-containing gas. Alternatively, the fuel can be preheated. In the combustion chamber (101) the fuel is combusted in the presence of the oxygen-containing gas. After the combustion, the temperature of the hot carrier gas is above 800 °C to bring the particulate carbon black-containing feedstock to the required temperature for the pyrolysis. The particulate carbon containing feedstock can be injected directly in the combustion chamber (101), in the choke (102) or in the tunnel (103). The particulate carbon containing feedstock can also be injected in any of the aforementioned combinations such as in the choke (102) as well as in the tunnel (103). The furnace reactor (100) comprises multiple positions for the quench (104a, 104b, 104c, 104d). The quench medium that is usually water reduces the temperature of the hot gas flow (or the product mixture) so that the reaction for forming the carbon black is terminated. Accordingly, the position of the quench has an influence of the residence time of the feedstock as well as the components derived from the feedstock. This means that residence time is increased if the quench position is adjusted further downstream the reactor. For instance, a quench at a position (104a) near the choke (102) results in a low residence time and a quench at a position (104c) downstream the reactor results in a high residence time. The reaction volume is the volume of the reactor between the injection of the feedstock and the position of the quench. If the feedstock is injected in the tunnel (103) and the distance between the position of the quench and the injection of the feedstock is 4200 mm, and the diameter of the tunnel is 200m, the resulting reaction volume is 132 L. The feeding rate of the particulate carbon containing feedstock should be adjusted depending on the reaction volume as mentioned in the description. For the present invention, a quench position at the back part of the tunnel is particularly preferred so that the particulate carbon containing feedstock has sufficient time for the evaporation or pyrolysis.

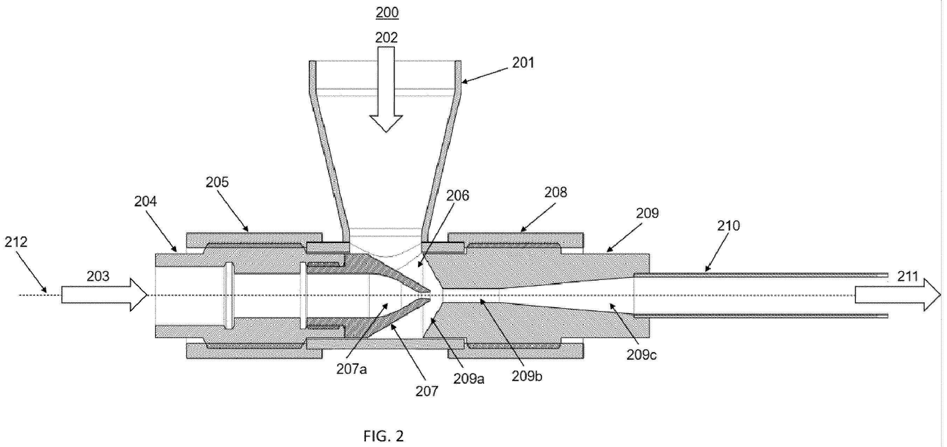

Referring to FIG. 2, a feeding and mixing device (200) is shown that comprises a carrier gas inlet (204), a particle inlet (201), means for accelerating and injecting a stream of carrier gas (207), a deagglomeration conduit (209), a mixing chamber (206) and an outlet for said carrier gas entraining particles (210). The carrier gas passage (212) is also indicated in FIG. 2. The carrier gas passage (212) extends along a longitudinal axis through said feeding and mixing device. The carrier gas (203) enters the feeding and mixing device (200) through the carrier gas inlet (204) and is accelerated in the means for accelerating and injecting a stream of carrier gas (207). In FIG. 2, the means for accelerating and injecting a stream of carrier gas (207) is configured as a Laval-nozzle. The Laval-nozzle comprises a convergent area (207a) in the flow direction. The resulting carrier gas jet is injected into the mixing chamber (206). The particles such as the particulate carbon black-containing feedstock (202) are perpendicularly injected into the mixing chamber (206). Accordingly, the particles will be entrained in the accelerated carrier gas. The abrupt acceleration of the particles results in a deagglomeration of the particles. The accelerated carrier gas comprising the particles are further injected into the deagglomeration conduit (209). In the deagglomeration conduit (209) the particles collide with each other or the inner wall or inner surface of the deagglomeration conduit (209) thereby a further deagglomeration is achieved. It is desired that the means for accelerating and injecting a stream of carrier gas (207) is configured in such a way that the carrier gas jet is directly injected into the deagglomeration conduit (209). Accordingly, a loss of the velocity can be minimized. The deagglomeration conduit (209) normally comprises from downstream to upstream (in the flow direction) an inlet funnel (209a), a conduit having a constant inner diameter (209b) and a diffuser nozzle diverging in said flow direction (209c). The inlet funnel (209a) further allows an optimal flow behavior into the conduit having a constant inner diameter (209b). The diffuser nozzle diverging in said flow direction (209c) is also beneficial for the flow behavior. The outlet (406) can be connected to the means for injecting the feedstock into a reactor according to FIG.1. It is preferred that one feeding and mixing device (200) supplies the deagglomerated feedstock to multiple means for injecting the feedstock into the reactor. It is further desired that the feeding and mixing device (200) comprises a screw conveyor that is connected with the particle inlet (201). The screw conveyor can provide a suitable amount or weight of particles into the mixing chamber (206). Furthermore, the feeding and mixing device (200) can be operated under pressure such as 1.5 bar or 2 bar. A pressure tank for the particles (e.g. particulate carbon containing feedstock) can be installed. Such a pressure tank is in fluid connection with the particle inlet (201) and is preferably connected with the feeding and mixing device (200) via a valve. Preferably two pressure tanks are present, wherein a first pressure tank connected to a second pressure tank. Both pressure tanks can be connected via a valve.

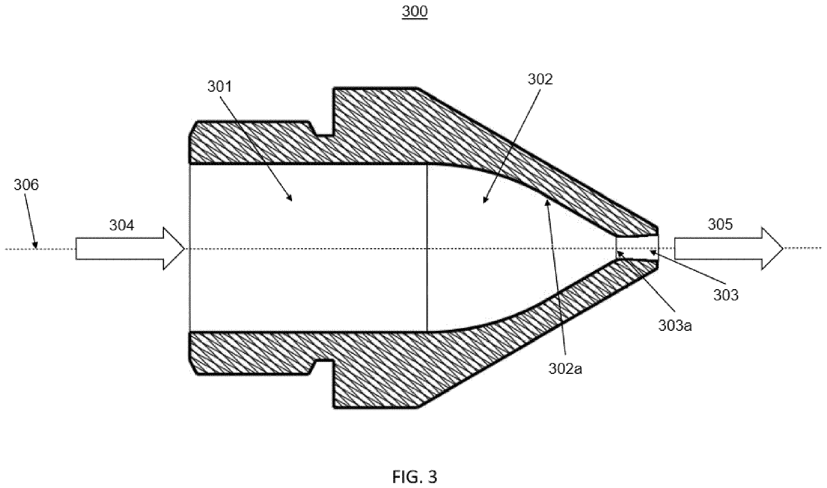

In FIG. 3, a Laval-nozzle (300) for use in feeding and mixing device (200) is shown. The carrier gas passage (306) extends along a longitudinal axis through said Laval-nozzle (300). The carrier gas (304) enters the Laval-nozzle (300) and is accelerated. The carrier gas jet (305) then leaves the Laval-nozzle (300). The Laval-nozzle (300) comprises a section that has a constant diameter (301), a section that converges (302a) in the flow direction (302), a throat (303a) and a divergent section (303). In the Laval-nozzle (300) the carrier gas is accelerated to a velocity of over 1 Ma.

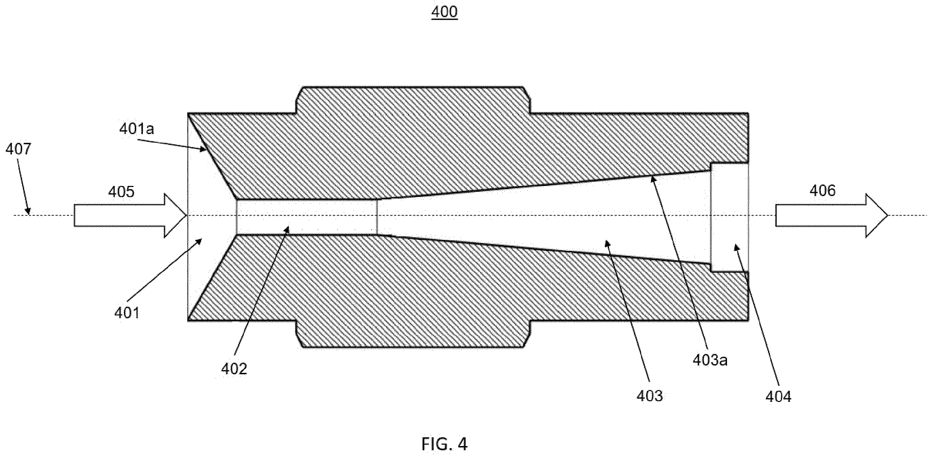

In FIG. 4, the deagglomeration conduit (400) for use in feeding and mixing device (200) is shown. The carrier gas passage (407) extends along a longitudinal axis through said deagglomeration conduit (400). The deagglomeration conduit (400) comprises an inlet funnel (401), a conduit having a constant inner diameter (402) and a diffuser nozzle (403) diverging in said flow direction (403a). Furthermore, an outlet (404) is shown that can be connected to means to inject the deagglomerated particles (e.g. deagglomerated particulate carbon containing particles) (406) into the reactor.

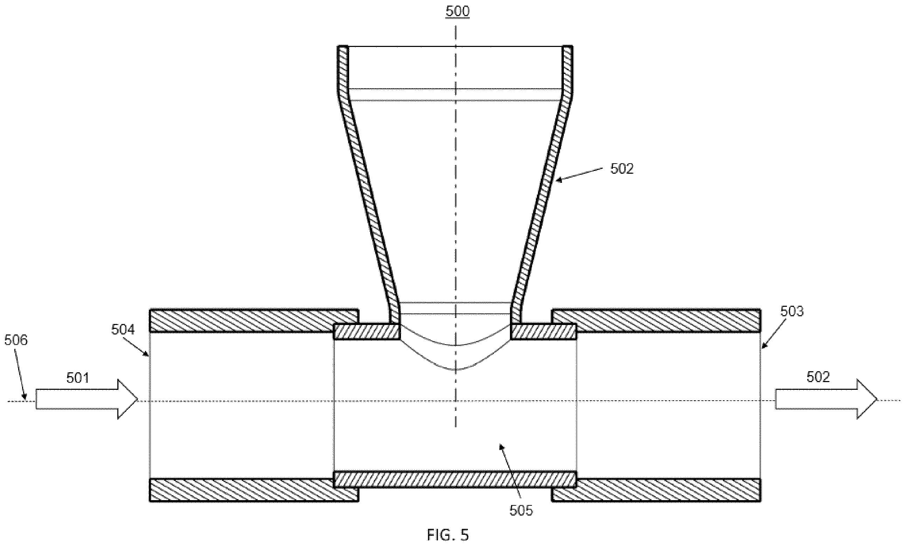

In FIG. 5, an alternative feeding and mixing device (500) is shown. The carrier gas passage (506) is also indicated in FIG. 5. The carrier gas passage (506) extends along a longitudinal axis through said feeding and mixing device. Said feeding and mixing device (500) comprises an inlet (504) for the carrier gas (501), a mixing chamber (505), an inlet for particles (502), and an outlet (503). A carrier gas (501) enters the feeding and mixing device (500). The carrier gas (501) should have a desirable velocity such as below 1 Ma or between 2 m/s to 1 Ma or between 20 m/s to 200 m/s. The particles such as the particulate carbon black-containing feedstock (202) are perpendicularly injected into the mixing chamber (507). Accordingly, the particles will be entrained in the accelerated carrier gas. The abrupt acceleration of the particles results in a deagglomeration of the particles. The outlet (503) can be connected to a reactor. Similar to the feeding and mixing device (200), a screw conveyor and at least one pressure tank can be installed.

In addition, the present invention will be described by means of the following aspects.

1. A method for the treatment of carbon black comprising:
gasification of a carbon black-containing feedstock at a temperature of 730 °C to 950 °C.

2. The method according to aspect 1, wherein the carbon black-containing feedstock is milled before the gasification step, and/or wherein the obtained carbon black is milled after the gasification step.

3. The method according to any one of aspects 1 or 2, wherein the gasification is carried out for 1 min to 10 h, preferably 10 min to 5 h, more preferably 20 min to 3 h, and most preferably 30 min to 2 h.

4. The method according to any one of the preceding aspects, wherein the gasification is carried out at a temperature of 730 °C to 910 °C, preferably 730 °C to 900 °C, more preferably 740 to 890 °C, even more preferably 740 °C to 860 °C, and most preferably 790 to 850 °C.

5. The method according to any one of the preceding aspects, wherein the carbon black-containing feedstock is heated to the required temperature for the gasification (b) by using a burner, preferably the fuel for the burner is hydrogen or natural gas, preferably hydrogen.

6. The method according to any one of the preceding aspects, wherein the gasification is carried out by using $H_2O$ and/or $CO_2$, preferably $H_2O$.

7. The method according to any one of the preceding aspects, wherein the gasification is carried out by subjecting the carbon black-containing feedstock with a gas comprising $H_2O$ and/or $CO_2$, preferably $H_2O$.

8. The method according to any one of the preceding aspects, wherein the gasification is carried out by subjecting the carbon black-containing feedstock with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

9. The method according to any one of the preceding aspects, wherein the gasification atmosphere in which the carbon black-containing feedstock is treated comprises 20 to 100 mol-% $H_2O$ and/or $CO_2$, preferably 30 to 100 mol -% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gasification atmosphere in which the carbon black-containing feedstock is treated.

10. The method according to any one of the preceding aspects, wherein the $H_2O$ for the gasification as well as the required heat is provided by at least one hydrogen burner.

11. The method according to any one of the preceding aspects, wherein the gasification is carried out in a fluidized bed reactor, auger reactor, batch reactor, fixed bed reactor, electric furnace and/or rotary kiln.

12. The method according to any one of the preceding aspects, wherein the process further comprises the pyrolysis of particulate carbon black-containing feedstock before the gasification, wherein pyrolysis of particulate carbon black-containing feedstock comprises the pyrolysis of particulate carbon black-containing feedstock at a temperature of 300 °C to 710 °C and in the absence of oxygen, wherein a pyrolysis gas stream and a pyrolysis carbon black-containing particulate is obtained.

13. The method according to any one of the preceding aspects, wherein the carbon black-containing feedstock comprises recovered carbon black.

14. The method according to any one of the preceding aspects, wherein the carbon black-containing feedstock comprises coke.

15. The method according to any one of the preceding aspects, wherein the carbon black-containing feedstock is recovered carbon black.

16. The method according to any one of the preceding aspects, wherein the carbon black-containing feedstock is recovered carbon black and the recovered carbon black is derived from the pyrolysis of rubber granulate, plastic granulate, and/or biomass-based granulate, preferably rubber granulate.

17. The method according to any one of the preceding aspects, wherein the carbon black-containing feedstock is recovered carbon black and recovered carbon black is derived from the pyrolysis of tire, preferably a pneumatic tire, a tire tread, a tire belt, a tire belt reinforcement, a tire carcass, a tire carcass reinforcement, a tire sidewall, tire inner liner, tire apex, tire shoulder, tire hump strip, tire chafer, a tire bead filler

18. The method according to any one of the preceding aspects, wherein the carbon black-containing feedstock is recovered carbon black and recovered carbon black is derived from the pyrolysis of a cable sheath, a tube, a drive belt, a conveyor belt, a roll covering, a shoe sole, a hose, a sealing member, a profile, a damping element, a coating or a colored or printed article.

19. The method according to any one of the preceding aspects, wherein the volume average particle size x50 of the carbon black-containing feedstock is from 1 to 800 $\mu$m, preferably 50 to 500 $\mu$m, more preferably 60 to 400 $\mu$m, and most preferably 70 to 250 $\mu$m, wherein the volume average particle size is preferably measured as described in the specification by dry measurement using laser diffraction.

20. The method according to any one of the preceding aspects, wherein the volume average particle size x90 of the carbon black-containing feedstock is from 0.3 to 50 $\mu$m, preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

21. The method according to any one of the preceding aspects, wherein the volume average particle size x90 of the carbon black-containing feedstock is from 1 to 800 $\mu$m, preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

22. The method according to any one of the preceding aspects, wherein the volume average particle size x95 of the carbon black-containing feedstock is from 1 to 800 $\mu$m, preferably 10 to 150 $\mu$m, more preferably 30 to 100 $\mu$m, and most preferably 35 to 60 $\mu$m, wherein the volume average particle size is preferably measured as described in the specification by dry measurement using laser diffraction.

23. The method according to any one of the preceding aspects, wherein at least 50 wt.-%, preferably at least 60 wt.-%, more preferably at least 70 wt.-%, most preferably at least 80 wt.-%, of the carbon black-containing feedstock has a particle size of more than 1 to 2 mm, wherein the particle size is measured according to ASTM D 1511-12 (2017).

24. The method according to any one of the preceding aspects, wherein the carbon black-containing feedstock comprises 1 to 50 wt.-% coke, preferably 5 to 40 wt.-% coke, more preferably 6 to 35 wt.-% coke, and most preferably 10 to 30 wt.-% coke, based on the total weight of the carbon black-containing feedstock.

25. The method according to any one of the preceding aspects, wherein the carbon black-containing feedstock has a BET surface area determined according to ASTM D6556-17 in a range from 15 to 500 $m^2$/g, preferably from 30 to 300 $m^2$/g, more preferably from 40 to 250 $m^2$/g, even more preferably from 50 to 200 $m^2$/g, most preferably from 60 to 150 $m^2$/g.

26. The method according to any one of the preceding aspects, wherein the carbon black-containing feedstock has a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

27. The method according to any one of the preceding aspects, wherein the carbon black-containing feedstock has

(a) a BET surface area determined according to ASTM D6556-17 in a range from 40 to 100 $m^2$/g, preferably from 50 to 80 $m^2$/g, more preferably 55 to 70 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g,

(b) a BET surface area determined according to ASTM D6556-17 in a range from 10 to 100 $m^2$/g, preferably from 20 to 90 $m^2$/g, more preferably 25 to 80 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or

(c) a BET surface area determined according to ASTM D6556-17 in a range from 200 to 600 $m^2$/g, preferably from 250 to 500 $m^2$/g, more preferably 300 to 450 $m^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

28. The method according to any one of the preceding aspects, wherein the carbon black-containing feedstock has a statistical thickness surface area (STSA) determined according to ASTM D6556-17 in a range from 15 to 500 $m^2$/g, preferably from 20 to 400 $m^2$/g, more preferably from 30 to 300 $m^2$/g, even more preferably from 40 to 200 $m^2$/g, most preferably from 50 to 150 $m^2$/g.

29. The method according to any one of the preceding aspects, wherein the carbon black-containing feedstock has a volatile content measured at 950°C of 0.5 to 20 wt.-%, such as 1 to 10 wt.-%, 1.5 to 10 wt.-%, 1 to 5 wt.-%, 2 to 10 wt.-%, 2 to 15 wt.-%, 2.5 to 10 wt.-%, 3 to 7 wt.-%, or 3.5 to 7 wt.-%.

30. The method according to any one of the preceding aspects, wherein the carbon black-containing feedstock

(i) has a transmittance of at least 20 %, preferably at least 30 %, more preferably at least 40 %, even more preferably at least 60 %, most preferably at least 80 %, wherein the transmittance at 425 nm in toluene is measured according to ASTM D 1618-18 against toluene, and/or

(ii) has a transmittance of at least 20 %, preferably at least 30 %, more preferably at least 40 %, even more preferably at least 60 %, most preferably at least 80 %, wherein the transmittance at 355 nm in toluene is measured according to ASTM D 1618-18 against toluene, wherein the transmittance is measured at 355 nm instead of 425 nm, and/or

(iii) has a transmittance of at least 20 %, preferably at least 30 %, more preferably at least 40 %, even more preferably at least 60 %, most preferably at least 80 %, wherein the transmittance at 300 nm in toluene is measured according to ASTM D 1618-18 against toluene, wherein the transmittance is measured at 300 nm instead of 425 nm.

31. The method according to any one of the preceding aspects, wherein carbon black-containing feedstock comprises zinc, preferably zinc oxide.

32. The method according to any one of the preceding aspects, wherein the carbon black-containing feedstock has a zinc content in a range of from 2.0 to 6.0 mass %, preferably from 2.5 to 5.5 mass %, more preferably from 3.0 to 5.0 mass %, most preferably from 3.5 to 4.5 mass %, wherein the zinc content is based on the total mass of the carbon black-containing feedstock and wherein the zinc content is preferably determined according to Inductively Coupled Plasma Optical Emission Spectrometry (ICP-OES), more preferably the zinc content is determined as described in the specification.

33. The method according to any one of the preceding aspects, wherein the carbon black-containing feedstock has a silicon (Si) content in a range of from 1.5 to 10.0 wt.-%, preferably from 1.8 to 6.0 wt.-%, more preferably from 2.0 to 5.0 wt.-%, most preferably from 2.2 to 4.5 wt.-%, wherein the wt.-% is based on the total weight of the carbon black-containing feedstock and wherein the silicon content is preferably determined by to Inductively Coupled Plasma Optical Emission Spectrometry (ICP-OES), more preferably the silicon content is determined as described in the specification.

34. The method according to any one of the preceding aspects, wherein silica (or silicon in form of silica) is embedded in the carbon black of the carbon black-containing feedstock, attached to the carbon black of the carbon black-containing feedstock, attached on the surface of the carbon black of the carbon black-containing feedstock, and/or associated in the carbon black of the carbon black-containing feedstock.

35. The method according to any one of the preceding aspects, wherein the carbon black-containing feedstock comprises ash, wherein ash comprise metal, metal compounds, silicon, oxygen, sulphur and/or silica, preferably metal comprises zinc, silicon, calcium, cobalt, manganese, potassium, aluminium, and/or iron.

36. The method according to any one of the preceding aspects, wherein the carbon black-containing feedstock has an ash content in a range of from 0.5 to 25 wt.-%, preferably from 1 to 20 wt.-%, more preferably from 2 to 15 wt.-%, most preferably from 3 to 10 wt.-%, wherein the wt.-% is based on the total weight of the carbon black-containing feedstock and wherein the ash content is determined according to ASTM D 1506-15 at 550 °C, 16 h.

37. The method according to any one of the preceding aspects, wherein ash is embedded in the carbon of the carbon black-containing feedstock, attached to the carbon of the carbon black-containing feedstock, attached on the surface of the carbon of the carbon black-containing feedstock, and/or associated in the carbon of the carbon black-containing feedstock.

38. The method according to any one of the preceding aspects, wherein the carbon black-containing feedstock has an oxygen content in a range of from 1.0 to 3.0 wt.-%, preferably from 1.5 to 3.0 wt.-%, more preferably from 1.5 to 2.5 wt.-%, wherein the wt.-% is based on the total weight of the carbon black-containing feedstock and wherein the oxygen content is determined by elemental analysis as described in the specification.

39. The method according to any one of the preceding aspects, wherein the carbon black-containing feedstock has a sulfur content in a range of from 1.0 to 4.0 wt.-%, preferably from 2.0 to 4.0 wt.-%, more preferably from 2.0 to 3.0 wt.-%, wherein the wt.-% is based on the total weight of the carbon black-containing feedstock and wherein the sulfur content is determined by elemental analysis as described in the specification.

40. The method according to any one of the preceding aspects, wherein the carbon black-containing feedstock

(i) comprises at least 50 wt.-% carbon black, preferably at least 60 wt.-% carbon black, more preferably at least 70 wt.-% carbon black, even more preferably at least 80 wt.-% carbon black, and most preferably at least 90 wt.-% carbon black, based on the total weight of the carbon black-containing feedstock, and/or

(ii) comprises 50 to 95 wt.-% carbon black, preferably 50 to 90 wt.-% carbon black, more preferably 65 to 87 wt.-% carbon black, more preferably 70 to 85 wt.-% carbon black, and most preferably 75 to 80 wt.-% carbon black, based on the total weight of the carbon black-containing feedstock.

41. The method according to any one of the preceding aspects, wherein treated carbon black is obtained after the gasification.

42. The method according to any one of the preceding aspects, wherein the obtained treated carbon black after the gasification has a coke content below 15 wt.-%, preferably below 10 wt.-%, more preferably below 5 wt.-%, and most preferably below 1 wt.-%, based on the total weight of the treated carbon black.

43. The method according to any one of the preceding aspects, wherein the obtained treated carbon black after the gasification has an iodine adsorption number of 30 to 80 mg/g, preferably 40 to 70 mg/g, more preferably 45 to 65 mg/g, the iodine adsorption number is measured according to ASTM D1510-17.

44. The method according to any one of the preceding aspects, wherein the obtained treated carbon black after the gasification has a statistical thickness surface area (STSA) determined according to ASTM D6556-17 in a range from 15 to 500 m$^2$/g, preferably from 20 to 400 m$^2$/g, more preferably from 30 to 300 m$^2$/g, even more preferably from 40 to 200 m$^2$/g, most preferably from 50 to 150 m$^2$/g.

45. The method according to any one of the preceding aspects, wherein the obtained treated carbon black after the gasification has a BET surface area determined according to ASTM D6556-17 in a range from 15 to 500 m$^2$/g, preferably from 30 to 300 m$^2$/g, more preferably from 40 to 250 m$^2$/g, even more preferably from 50 to 200 m$^2$/g, most preferably from 70 to 150 m$^2$/g.

46. The method according to any one of the preceding aspects, wherein the obtained treated carbon black after the gasification has a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

47. The method according to any one of the preceding aspects, the obtained treated carbon black after the gasification has

(a) a BET surface area determined according to ASTM D6556-17 in a range from 40 to 100 m$^2$/g, preferably from 50 to 80 m$^2$/g, more preferably 55 to 70 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g,

(b) a BET surface area determined according to ASTM D6556-17 in a range from 10 to 100 m$^2$/g, preferably from 20 to 90 m$^2$/g, more preferably 25 to 80 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g, and/or

(c) a BET surface area determined according to ASTM D6556-17 in a range from 200 to 600 m$^2$/g, preferably from 250 to 500 m$^2$/g, more preferably 300 to 450 m$^2$/g, and a compressed oil absorption number (COAN) measured according to ASTM D3493-16 in a range from 30 to 200 mL/100 g, preferably from 40 to 150 mL/100 g, more preferably from 50 to 120 mL/100 g, even more preferably from 55 to 110 mL/100 g, most preferably from 60 to 90 mL/100 g.

48. The method according to any one of the preceding aspects, wherein the obtained treated carbon black after the gasification has a volatile content measured at 950°C of 0.01 to 10 wt.-%, such as 0.3 to 10 wt.-%, 0.5 to 10 wt.-%, 0.7 to 5 wt.-%, 0.8 to 4 wt.-%, 0.9 to 3 wt.-%, 1 to 2.5 wt.-%, 1.1 to 2.3 wt.-%, 1.2 to 2.2 wt.-%, 1.3 to 2.1 wt.-%, 1.4 to 2 wt.-%, 1.5 to 1.9 wt.-%, or 1.6 to 1.8 wt.-%.

49. The method according to any one of the preceding aspects, wherein the obtained treated carbon black after the gasification

(i) has a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and/or

(ii) has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and/or

(iii) has a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

50. The method according to any one of the preceding aspects, wherein the volume average particle size x90 of the obtained treated carbon black is from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

51. The method according to any one of the preceding aspects, wherein the obtained treated carbon black after the gasification has an ash content in a range of from 3 to 50 wt.-%, preferably from 10 to 40 wt.-%, more preferably from 10 to 35 wt.-%, most preferably from 15 to 30 wt.-%, wherein the wt.-% is based on the total weight of the obtained treated carbon black after the gasification and wherein the ash content is determined according to ASTM D 1506-15 at 550 °C, 16 h, preferably the ash content of the obtained treated carbon black after the gasification of the carbon black-containing feedstock is higher than the ash content of the carbon black-containing feedstock.

52. Carbon black obtained according to any one of the preceding claims.

53. Use of gasification of a carbon black-containing feedstock comprising coke, preferably according to any one of the preceding method aspects, at a temperature of 730 °C to 950 °C to selectively reduce the coke content with respect to the carbon black content of the carbon black-containing feedstock.

54. Treated carbon black, preferably defined according to anyone of the previous aspects, wherein the treated carbon black has a MOAH value of below 500 mg/kg, preferably below 300 mg/kg, more preferably below 250 mg/kg, and most preferably below 200 mg/kg, determined as described in the specification.

55. Treated carbon black, preferably defined according to anyone of the previous aspects, wherein the treated carbon has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm.

56. Treated carbon black, preferably defined according to anyone of the previous aspects, wherein the treated carbon has a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

57. Treated carbon black, preferably defined according to anyone of the previous aspects, wherein the treated carbon black has a cumulative pore volume for pore sizes of 0.3 to 1.5 nm of 0.015 to 0.050 cm$^3$/g, preferably 0.018 to 0.045 cm$^3$/g, more preferably 0.020 to 0.040 cm$^3$/g, even more preferably 0.021 to 0.035 cm$^3$/g, and most preferably 0.023 to 0.034 cm$^3$/g, wherein the cumulative pore volume is determined as mentioned in the specification.

58. Treated carbon black, preferably defined according to anyone of the previous aspects, wherein the treated carbon black has a cumulative pore volume for pore sizes of 0.3 to 0.75 nm of 0.008 to 0.035 cm$^3$/g, preferably 0.009 to 0.025 cm$^3$/g, more preferably 0.0101 to 0.020 cm$^3$/g, even more preferably 0.011 to 0.0185 cm$^3$/g, and most preferably 0.011 to 0.015 cm$^3$/g, wherein the cumulative pore volume is determined as mentioned in the specification.

59. The treated carbon black defined according to anyone of the previous aspects 54 to 58, wherein the treated carbon black has an ash content in a range of from 3 to 50 wt.-%, preferably from 10 to 40 wt.-%, more preferably from 10 to 35 wt.-%, most preferably from 15 to 30 wt.-%, wherein the wt.-% is based on the total weight of the obtained treated carbon black after the gasification and wherein the ash content is determined according to ASTM D 1506-15 at 550 °C, 16 h.

60. The treated carbon black defined according to anyone of the previous aspects 54 to 59, wherein the treated carbon black is derived from a pyrolyzed particulate carbon-containing feedstock.

61. Use of gasification of a carbon black-containing feedstock comprising coke at a temperature of 730 °C to 950 °C to increase the cumulative pore volume for pore sizes of 0.3 to 1.5 nm of the obtained treated carbon black with respect to the cumulative pore volume for pore sizes of 0.3 to 1.5 nm of the carbon black-containing feedstock, wherein the cumulative pore volume is determined as mentioned in the specification.

## EXAMPLES

Rubber granulate 1, i.e. Gummigranulat 1,6 - 3,2 mm, used in the experiments was obtained from ESTATO Umweltservice GmbH (ESTATO), Germany. The rubber granulate was derived from waste tires and comprises synthetic rubber (SBR) and natural rubber (NR). However, it is also possible to use different particulate carbon black-containing feedstocks such as plastic granulates or biomass-based granulates. The rubber granulate 1 comprises carbon black.

## Example A: Continuous process for pyrolysis and gasification

The rubber granulate 1 was transported on a conveyor belt and then fed into a 36 inch multiple hearth furnace having six hearths (floors) from above via a double flap. On each of the six hearths, both the temperature and the residence time of the rubber granulate 1 on the respective floor could be set. The temperature could be regulated using natural gas burners. Each floor was equipped with its own burner. The dwell time could be set via the modification of the number of baffles on the rotating arms and the shaft rotation speed. Said configuration was adapted according to Table 1. This results in different residence times of the used granulate on the different levels. The fewer arms there are, the longer the retention time. In addition to the different temperatures and residence times, the different levels can be operated with varying gas atmospheres. While only the gases required to operate the burners are used on the first two levels, additional steam is introduced on the lowest level. While a temperature of 700 °C is set on the first two shelves, a temperature of 800 °C or 850 °C were selected on the lower four hearths. In this case, the multiple hearth furnace can be divided into two reaction zones. While the pyrolysis reaction takes place on the first two hearths, the test parameters on the lower four hearths are selected so that decoking can take place.

In Example 4A, the rubber granulate 1 was subjected to a pyrolysis reaction without a subsequent gasification. Accordingly, hearths 3 to 6 were not heated and no steam was subjected into the reactor.

Table 1: Process conditions used for the multiple hearth furnace (MHF) process.

| Hearth | Number of used rabble arms | Residence time / min | Temp. / °C | Subjected steam / kg h$^{-1}$ | Bed depth (moving bed depth) / cm | Dead bed depth / cm |
|---|---|---|---|---|---|---|
| Example 1A | | | | | | |
| 1 | 3 | 12 | 700 | | 1.87 | 4.3 |
| 2 | 2 | 18 | 700 | | 1.83 | 4.3 |
| 3 | 1 | 36 | 800 | | 3.65 | 4.3 |
| 4 | 1 | 36 | 800 | | 3.65 | 4.3 |
| 5 | 1 | 36 | 800 | | 3.65 | 4.3 |
| 6 | 1 | 36 | 800 | 40 | 3.65 | 4.3 |
| Example 2A | | | | | | |
| 1 | 3 | 12 | 700 | | 1.87 | 4.3 |
| 2 | 2 | 18 | 700 | | 1.83 | 4.3 |
| 3 | 1 | 36 | 850 | | 3.65 | 4.3 |
| 4 | 1 | 36 | 850 | | 3.65 | 4.3 |
| 5 | 1 | 36 | 850 | | 3.65 | 4.3 |
| 6 | 1 | 36 | 850 | 10 | 3.65 | 4.3 |
| Example 3A | | | | | | |
| 1 | 3 | 12 | 700 | | 1.87 | 4.3 |
| 2 | 2 | 18 | 700 | | 1.83 | 4.3 |
| 3 | 1 | 36 | 800 | | 3.65 | 4.3 |
| 4 | 1 | 36 | 800 | | 3.65 | 4.3 |
| 5 | 1 | 36 | 800 | | 3.65 | 4.3 |
| 6 | 1 | 36 | 800 | 10 | 3.65 | 4.3 |
| Example 4A Pyrolysis | | | | | | |
| 1 | 3 | 12 | 700 | | 1.87 | 4.3 |
| 2 | 2 | 18 | 700 | | 1.83 | 4.3 |
| 3 | 1 | 36 | Not heated | | 3.65 | 4.3 |
| 4 | 1 | 36 | Not heated | | 3.65 | 4.3 |
| 5 | 1 | 36 | Not heated | | 3.65 | 4.3 |
| 6 | 1 | 36 | Not heated | 0 | 3.65 | 4.3 |

In table 2, the process conditions are summarized. The air flow (Air) as well as the natural gas flow (NG) is indicated for the burner of hearths 3 to 6. The feed rate for Example 4A was 22.6 kg/h.

Table 2: Process conditions used for the MHF process.

| Example | 1A | 2A | 3A |
|---|---|---|---|
| Air / Nm³/h | 90 | 102 | 59 |
| NG / Nm³/h | 10 | 11.48 | 6.2 |
| Steam flow / kg h⁻¹ | 40 | 10 | 10 |
| Production Rate kg/h | 7.56 | 7.15 | 8.78 |
| Feeding rate kg/ h | 23.76 | 24.5 | 23.76 |
| Pyrolysis Yield / wt.-% | 43 | 43 | 43 |
| De-coking Yield / wt.-% | 73 | 69 | 85 |
| Total solid Yield / wt.-% | 31 | 30 | 37 |
| Calc. removed carbon / wt.-% | 27 | 31 | 15 |

The pyrolysis yield is the yield after the pyrolysis in the first two hearths. For the determination of the pyrolysis yield, the gasification process was omitted and the yield after the pyrolysis was noted. The de-coking yield is the yield after the gasification based on the feedstock subjected to the gasification. Accordingly, Example 1A has a yield of 73 wt.-% based on the feedstock subjected to the gasification so that 27 wt.-% of carbon was converted to gas. It is believed that the coke present in the feedstock has a higher reactivity compared to carbon black. If the temperature during the gasification is below 950 °C, the coke is selectivity converted instead of the carbon black. At higher temperatures, the selectivity decreases. Accordingly, in Example 1A, it is believed that the calc. removed carbon of 27 wt.-% is coke.

The properties of two commercial recovered carbon blacks (A1 (producer 1) and A2 (producer 2); both obtained after the pyrolysis of waste tire rubber granulate) and the obtained treated carbon blacks are shown in table 3.

Table 3: Properties of the treated carbon black.

| | Commercial rCB A1 | Commercial rCB A2 | Example 1A | Example 2A | Example 3A | Example 4A |
|---|---|---|---|---|---|---|
| **Toluene transmittance[1] at** 300 nm[1] / % | 0.0 | 9.5 | 94.5 | 94.25 | 88.84 | 0.03 |
| **Toluene transmittance[1] at** 355 nm[1] / % | 18.4 | 89.5 | 99.2 | 99.50 | 97.97 | 0.75 |
| **Toluene transmittance[2] at** 425 nm[2] / % | 79.2 | 99.7 | 99.9 | 99.76 | 100 | 28.82 |
| Ash content[3] / wt.-% | 23.9 | 22.8 | 31.9 | 30.7 | 30.1 | 27.7 |
| STSA[4] / m² g⁻¹ | 60.9 | 58.1 | 63.4 | 64.3 | 56.1 | 47 |
| BET[5] / m² q⁻¹ | 72.4 | 71.3 | 79.8 | 82.5 | 66.4 | 53.3 |
| C / wt.%[6] | n.D. | n.D. | 66.36 | 70.27 | 67.40 | 67.81 |
| H / wt.%[6] | n.D. | n.D. | 0.2 | 0.33 | 0.21 | 1.16 |
| N / wt.%[6] | n.D. | n.D. | 0.1 | 0.09 | 0.1 | 0.15 |
| S / wt.%[6] | n.D. | n.D. | 1.76 | 1.97 | 1.94 | 1.7 |
| O / wt.% [6] | n.D. | n.D. | 1.31 | 1.34 | 1.18 | 3.09 |
| H:C / atomic ratio | n.D. | n.D. | 0.036 | 0.056 | 0.037 | 0.203 |
| O:C / atomic ratio | n.D. | n.D. | 0.015 | 0.014 | 0.013 | 0.034 |
| Cumulative Pore Volume[7] for pore sizes of 0.3 to 0.70 nm / cm³/g | n.D. | 0.00646 | 0.0104 | 0.0181 | 0.014 | 0.00884 |

(continued)

| | Commercial rCB A1 | Commercial rCB A2 | Example 1A | Example 2A | Example 3A | Example 4A |
|---|---|---|---|---|---|---|
| Cumulative Pore Volume[7] for pore sizes of 0.3 to 0.75 nm / $cm^3/g$ | n.D. | 0.00703 | 0.0113 | 0.0187 | 0.0112 | 0.00973 |
| Cumulative Pore Volume[7] for pore sizes of 0.3 to 1.5 nm / $cm^3/g$ | n.D. | 0.0138 | 0.0230 | 0.0329 | 0.0215 | 0.0203 |

[1] Transmittance (Transmittance of Toluene Extract) was measured in accordance with ASTM D 1618-18 against toluene expect that the wavelength for the measurement was 300 nm or 355 nm instead of 425 nm.
[2] Transmittance at 425 nm in toluene (Transmittance of Toluene Extract) was measured according to ASTM D 1618-18 against toluene.
[3] The ash content was measured according to ASTM D 1506-15 at 550 °C, 16 h.
[4] STSA surface area was measured according to ASTM D6556-21.
[5] BET surface area was measured according to ASTM D6556-21.
[6] The mass factions are determined as mentioned below (CHNS content determination and O content determination).
[7] Cumulative Pore Volume having a pore size of 0.3 to 1.5 nm and 0.3 to 0.75 nm are determined as mentioned below.

It can be observed that the ash content for the treated carbon black in the MHF is higher than for the two commercial rCBs. This is due to the fact that additional steam and a treatment at higher temperatures was used in the MHF in order to de-coke the material. This causes some of the carbon to react with the steam to form carbon monoxide. Consequently, a reduced carbon content results in a higher ash content.

Moreover, the treated carbon black obtained from the tests in the MHF has higher transmission values than two commercial rCBs. It can therefore be concluded that the treated carbon black produced in the reactor is loaded with fewer organic, toluene extractable contaminants (such as aliphatics and small aromatics), than the two commercial rCBs.

Example 4A reveals that the H:C atomic ratio is significantly higher than the H:C atomic ratio of Examples 1A, 2A and 3A. This is an indication that contaminants are present on the carbon black obtained in Example 4A which are removed following de-coking.

Moreover, a high cumulative pore volume (microporosity) for carbon black that is recycled from a carbon black-containing feedstock is desired. The commercial recovered carbon blacks generally have a low cumulative pore volume. These pores are important for the applicability of the carbonaceous filler in a rubber matrix, as the high surface area and magnitude of Van Der Waal interactive forces in these small pores commonly act as sites for chemical bonding. In carbon black, these pores can exist either within or between primary particles. In recovered carbon black, coke deposition during the pyrolysis process would likely occur in these microporous regions, reducing the overall microporous surface area and microporous volume. This is anticipated to have a negative impact on in-application tests.

The higher amount of cumulative pore volume of the treated carbon black of examples 1A to 4A suggests that the MHF is more thermally efficient and there is less residence time required for complete primary pyrolysis. This results in less coking, so less blocking of micropores compared to commercial alternatives.

Furthermore, the gasification additionally improves the microporosity of the obtained treated carbon black as can be seen from examples 1A to 3A compared to 4A. Thus, the gasification of the coke causes a more microporous surface, which is anticipated to improve in rubber application processes.

<u>Measurement of the Cumulative Pore Volume</u>

Adsorption and desorption isotherms for $CO_2$ at 273 K were collected between the pressure range (P/P0) of 0.05 and 1 on a Quantachrome Autosorb iQ3 Gas Sorption Analyser (Software: Model 7 ASiQWin Version: 5.21). Briefly, 0.4 g of carbon sample was placed in a de-gassed sample cell and was de-gassed at 300 degrees Celsius under vacuum to remove adsorbed gases and moisture from the sample surface. The degassed sample was re-weighed and loaded onto the analysis station, where it was exposed to a further degas step under helium, followed by gaseous $CO_2$ at close to condensation temperatures (273 K) within the pressure range of 0.01 - 1 bar.

As the saturation pressure of $CO_2$ at 273 K is very high, low relative pressure measurements necessary for micropore analysis are achieved in the range of moderate absolute pressures (1-760 torr).

Following the gas sorption isotherm collection, it was subsequently processed using the Non-Linear Density Functional theory using a pre-paramatised kernel provided on the Quantachrome Instruments AutoSorb iQ3 Gas Sorption Analyser titled ("$CO_2$ adsorption on to carbon at 273 K").

### Example B: Stepwise process for pyrolysis and gasification

Rubber granulate 2, i.e. Gummigranulat 0,0 - 0,5 mm (Article Nr. 005GUM), used in the following experiments was obtained from ESTATO Umweltservice GmbH (ESTATO), Germany. The rubber granulate was derived from waste tires and comprises synthetic rubber (SBR) and natural rubber (NR). The particle fractions are shown in table 4. Moreover, the weight average particle diameter (Dw50) was about 400 $\mu$m, measured according to ASTM D 1511-00 (2006). However, it is also possible to use different particulate carbon black-containing feedstocks such as plastic granulates or biomass-based granulates.

Table 4: Particle distribution of rubber granulate from ESTATO, measured according to ASTM D 1511-00 (2006).

| Particle fraction < 0.125 mm | 2.0 wt.-% |
|---|---|
| Particle fraction 0.125 - 0.25 mm | 9.6 wt.-% |
| Particle fraction 0.2 5 - 0.50 mm | 34.5 wt.-% |
| Particle fraction 0.50 - 1.0 mm | 45.1 wt.-% |
| Particle fraction 1.0 - 2.0 mm | 8.8 wt.-% |
| Particle fraction < 2.0 mm | 0.0 wt.-% |

The characterization of the rubber granulate from ESTATO is shown in table 5.

Table 5: Characterization of the rubber granulate from ESTATO.

| Property | Measurement | Unit | Value |
|---|---|---|---|
| Carbon mass fraction | See method below | % | 87.623 |
| Hydrogen mass fraction | See method below | % | 7.767 |
| Nitrogen mass fraction | See method below | % | 0.396 |
| Sulfur mass fraction | See method below | % | 2.022 |
| Oxygen mass fraction | See method below | % | 2.191 |
| Water content | ASTM D 4928-12(2018) | % | 2.19 |
| Ash content | ASTM D 1506-15 at 550 °C, 16 h | % | 11.29 |
| Gross Calorific Value | ASTM D 4809:2018 | MJ/kg | 35.121 |

In addition, the rubber granulate comprises several metals in a mass fraction of about 300 ppm. For instance, zinc, and iron.

CHNS content determination by means of elemental analyser

The carbon mass fraction, hydrogen mass fraction, nitrogen mass fraction and sulfur mass fraction (i.e. carbon weight fraction, hydrogen weight fraction, nitrogen weight fraction and sulfur weight fraction) are measured using an elemental analyser with thermal conductivity and infrared detector. The analyser is a device for the fully automatic and quantitative analysis of the above elements. The combustion tube is brought to a temperature of 1100 °C and the reduction tube to 850 °C. First, a blank measurement is conducted. The carbon peak area should have a value < 50, the hydrogen peak area a value < 300, the nitrogen peak area a value < 50 and the sulphur peak area a value < 350. Otherwise, the individual adsorption columns are heated and then empty measurements are started again. The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

The compensation of the blank measurement is calculated as follows,

$$acomp. \quad = \quad a - b,$$

wherein acomp. Is the compensated peak area, a is the measured peak area, and b is the blank measurement value.

Next, the daily factor is measured. For this purpose, 3 mg of sulphanilamide and 3 mg of low-level standard (e.g. carbon black standard) are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

Wherein f is the daily factor, $c_{theor.}$ is the theoretical factor, $c_{act.}$ is the actual calculated elemental concentration.

Then, 8 tin capsules each containing 5 mg $\pm$ 1 mg of the desired measured component, such as rubber granulate, are weighed. After weighing the respective samples, they are placed in the capsule press, covered with helium for 35 s and then cold welded.

For the measurement, the combustion tube is enriched with $O_2$. The elements C, H, N and S burn to form $CO_2$, $H_2O$, NOx, $SO_2$ and $SO_3$. Halogen bound in the sample reacts to form volatile halogen compounds. In addition, there are $WO_3$ granules in the combustion tube that provide further $O_2$ as a catalyst, prevent the formation of nonvolatile sulphates and bind interfering alkali and alkaline earth elements. The carrier gas stream is fed into the reduction tube with Cu filling. Nitrogen oxides (NOx) are completely reduced to $N_2$ at the copper contact. $SO_3$ is reduced to $SO_2$. Volatile halogen compounds are bound to the silver wool.

$N_2$ is not adsorbed and enters the thermal conductivity detector as the first measuring component, $CO_2$, $H_2O$ and $SO_2$ are adsorbed on the respective adsorption columns.

Then, one after the other, the adsorption columns are brought to desorption temperature, so that $CO_2$, then $H_2O$ as carrier gas enters the thermal conductivity detector and $SO_2$ enters the infrared detector. Depending on the type and concentration of the components, the detector delivers an electrical signal which is digitised and integrated. The measurement signal is recorded as a function of time and displayed as an integral value. The absolute element content of the sample is calculated from this integral value of the individual measurement peaks and the calibration factors.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

O content determination by means of elemental analyser

Depending on the oxygen concentration, an electrical signal is transmitted from the thermal conductivity detector (WLD) of the elemental analyser to a micro controller and then displayed as an integral value. From the integral value of the measurement peaks and the calibration factor, the absolute element content of the sample is concluded.

The pyrolysis tube is heated to a temperature of 1050°C. First, a blank measurement is conducted. The oxygen peak area should have a maximum value of 200. If the blank value is not below 200, CO adsorption column should be heated up (260 °C, CO desorption 150 °C). After the blank values have been successfully measured, the mean value of the blank value areas is calculated.

The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

Next, the daily factor is measured. For this purpose, 3 mg of acetanilide are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

wherein f is the daily factor, $c_{theor.}$ is the theoretical factor, $c_{act.}$ is the actual calculated elemental concentration.

Then, 8 tin capsules each containing 5 mg $\pm$ 1 mg of the desired measured component, such as rubber granulate, are weighed. After weighing the respective samples, they are placed in the capsule press, covered with helium for 35 s and then cold welded. The samples are then measured.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

Manufacturing of recovered carbon black in a furnace reactor

Rubber granulate 2 comprising carbon black was injected to the furnace reactor in the choke via a feeding and mixing device having a nozzle. The rubber granulate 2 was derived from waste tires and comprises synthetic rubber (SBR) and natural rubber (NR). The process was performed on a small-scale furnace reactor as shown in FIG. 1. The furnace reactor comprises a combustion chamber, a choke and a tunnel. The choke reduces the diameter to 45 mm and has a length of 4200 mm. Downstream of the choke a reactor tunnel is mounted having a diameter of 200 mm. Rubber granulate was injected to the furnace reactor in the choke via a feeding and mixing device having a nozzle as shown in FIG. 2. The reaction volume of the reactor was about 130 liters. The reaction volume was the volume of the reactor between the position of the injection of the feedstock to the position of the quench. The furnace reactor comprises a combustion chamber, a choke and a tunnel. The choke reduces the diameter to 45 mm. Downstream of the choke a reactor tunnel is mounted having a diameter of 200 mm and has a length of 4200 mm. The feeding and mixing device deagglomerated the rubber granulate by accelerating the particulate carbon black-containing feedstock.

The reactions conditions for the manufacturing of the carbon black are shown in table 6.

Table 6: Reaction conditions in the furnace reactor.

| Combustion Air Flow (STP)[5a] / m³/h | 150 | Nitrogen purge flow (STP) / m³/h | 14 |
|---|---|---|---|
| Natural Gas Flow (STP) / m³/h | 10.3 | Rubber granulate mass flow / kg/h | 25 |
| K value[5b] | 0.66 | Temperature of the hot gas flow / °C | 1500 |
| Combustion air temperature upstream combustion chamber / °C | 354 | Residence time /s | 0.394 |

(continued)

| Natural Gas temperature upstream combustion chamber / °C | 21 | | |
|---|---|---|---|

5a273.15 Kand 101325 Pa
5bThe k value is defined by the ratio of stoichiometric $O_2$ amount that is necessary for the complete stoichiometric combustion of the fuel to the supplied $O_2$ amount

After the injection of the rubber granulate feedstock, the reaction is quenched with water and the obtained carbon black was dried.

The temperature in the combustion chamber, i.e. the temperature of the hot combustion gases, was controlled by the temperature of the combustion air temperature upstream combustion chamber (i.e. temperature of the oxygen-containing gas). The k value was controlled by the natural gas flow (fuel) into the combustion chamber.

The obtained carbon black was milled to obtain the desired particle size distribution x99 mentioned in the table below.

The obtained carbon black is considered as recovered carbon black 2 and comprises coke.

Gasification of recovered carbon black

Recovered carbon black 1, recovered carbon black 2 and recovered carbon black 3 were subjected to a selective gasification. Recovered carbon 1 black was obtained from a first producer and recovered carbon black 3 was obtained from a second producer and both materials comprise coke. The gasification was carried out in a fluidized bed reactor. The gasification either utilized $H_2O$ or $CO_2$. The conditions for the gasification are shown in table 7. The time indication the said table refers to the residence time in the fluidized bed reactor.

The gasification was carried out in a fluidized bed reactor. The setup comprises a vertically arranged tube made of Inconel having a length of 1,500 mm and inner diameter of 108 mm defining the reactor chamber. The Inconel tube is enclosed on its outer surface along the long axis by insulation and heating modules made from in total eight Fibrothal semishells (each having a power of 2,500 W), forming four heating zones. A gas flow is introduced at the bottom end of the tube from a connected gas supply system. The first heating zone from the bottom end of the tube is used for heating up the gas flow to the desired temperature, the remaining heating zones are for treating material filled into the reactor chamber at the desired temperature. Controlling of the heating shells is done via thermal elements, being positioned between the reactor's external wall and the corresponding heating shell. The temperature in each heating zone is further measured inside the reaction chamber by temperature sensors. Filling of the discontinuous operating fluidized bed is done via the reactor's head.

The reaction chamber of the reactor was filled to about half its volume with the carbon black feedstock to be treated, corresponding to an amount of about 800-2000 g. The heating modules were then powered (100% power) and the carbon black heated to the respective target temperature as indicated below under a continuous gas flow (mixture of steam and nitrogen: 240 Nl/h nitrogen and 140 ml/h water (liquid) = 42 mol % of $H_2O$). When the respective target temperature was approached the power supplied to the heating modules was regulated to hold the respective target temperature. The sample was then maintained at the respective target temperature for the indicated dwell time under the continuous gas low. Subsequently, the heating modules were switched off and the sample was cooled down under the continuous gas flow to ambient temperature and then exposed to air and removed from the reactor for characterization and testing of the obtained treated carbon black.

Table 7: Reaction conditions for the gasification.

| Example | CB feedstock | Temp. / °C | Time / min | $H_2O$ | $CO_2$ | Particle size |
|---|---|---|---|---|---|---|
| | | | | | | distributio n x95 / $\mu m^8$ |
| Comp.1 (P8) | Recovered carbon black 1 | N/A | N/A | N/A | N/A | 10.48 |
| 2 (P2) | Recovered carbon black 1 | 800 | 30 | X | | 10.48 |
| 3 (P1) | Recovered carbon black 1 | 800 | 60 | X | | 10.48 |
| 4 (P3) | Recovered carbon black 1 | 750 | 30 | X | | 10.48 |
| 5 (P5) | Recovered carbon black 1 | 800 | 30 | | X | 10.48 |
| 6 (P4) | Recovered carbon black 1 | 800 | 60 | | X | 10.48 |
| 7 (P7) | Recovered carbon black 1 | 750 | 30 | | X | 10.48 |

(continued)

| Example | CB feedstock | Temp. / °C | Time / min | $H_2O$ | $CO_2$ | Particle size distributio n x95 / $\mu m^8$ |
|---|---|---|---|---|---|---|
| 8 (P6) | Recovered carbon black 1 | 750 | 60 | | X | 10.48 |
| Comp. 9 | Recovered carbon black 2 | N/A | N/A | | | Not determined |
| 10 | Recovered carbon black 2 | 800 | 120 | X | | Not determined |
| Comp. 11 | Recovered carbon black 3 | N/A | N/A | N/A | N/A | Not determined |
| 12 | Recovered carbon black 3 | 800 | 120 | X | | Not determined |
| [8]The particle size was measured as descried below. | | | | | | |

The preparation of the rubber compositions and the in rubber tests are described below. A general process for the production of rubber compounds and their vulcanisates is described in the book: "Rubber Technology Handbook", W. Hofmann, Hanser Verlag 1994.

Determined particle size distribution

The particle size distribution is determined by dry measurement with the measurement system from Sympatec GmbH (Germany) consisting of VIBRI: conveyor unit (by vibration); RODOS: compressed air dispersion; and HELOS BR: measuring unit, laser diffraction. As sample preparation, 0.5 g of the dried material was filled into the funnel. During the measurement, the sample is fed with the VIBRI unit to the compressed air dispersion unit RODOS by vibration. Measurement is accomplished in HELOS BR unit using laser diffraction. OPTICAL concentration ($c_{opt}$) was automatically filtered between 5-15% during the measurement. Three separate measurements of 10 sec using each 0.5 g of the material were recorded. Before each measurement, a background measurement of 15 sec was recorded to minimize noise. The obscuration range was controlled by the feeding rate with automatic adjustment and the hopper gap in the range of 5-15% using an integral factor of 0.2. The dispersing air pressure was set to 3 bar. Reported values (volume distribution) represent the average of three measurements after the data analysis using a standard analysis model in the instrument software.
The properties of the respective carbon blacks were measured and the results are indicated in table 8. The expression "< 2.0" means that respective value was not detected at the indicated limit of quantification.

Table 8: Properties of respective carbon black

| Ex. | STSA[4] / $mm^2$/g | Volatil es[8] / % | Toluene transmi ttance[2] at 425 nm | PAH22 content / mg/kg | MOAH[11] / mg/kg | MOSH / POSH[11] / mg/kg | Ash content[3] / wt.-% | Particle size distribu tion x99 / $\mu m^8$ |
|---|---|---|---|---|---|---|---|---|
| Comp. 1 | 58.3* | 4.5 | 63.8[10] | 43.8 | 1103* | 1491* | 23.11 | < 5 |
| 2 | 62.1 | 1.6 | 100.0 | 0.628 | < 2.0 | 148 | 22.64 | < 5 |
| 3 | 64.6 | 1.5 | 99.9 | 1.13 | 8.3 | 192 | 23.60 | < 5 |
| 4 | 62.5 | 1.8 | 100.0 | 0.457 | 3.3 | 100 | 22.88 | < 5 |
| 5 | 63.0 | 1.7 | 99.9 | 0.354 | < 2.0 | 34 | 23.61 | < 5 |
| 6 | 59.3 | 2.0 | 99.9 | 1.33 | < 2.0 | 824 | 23.50 | < 5 |
| 7 | 63.8 | 3.5 | 93.8 | n.D. | n.D. | n.D. | 23.59 | < 5 |
| 8 | 63.6 | 2.5 | 99.9 | 0.541 | < 2.0 | 29 | 24.30 | < 5 |
| Comp. 9 | 81 | 1.9 | 58.7 | n.D. | n.D. | n.D. | n.D. | < 5 |
| 10 | 106.1 | 1.2 | 99.8 | n.D. | n.D. | n.D. | n.D. | < 5 |
| Comp. 11 | 60.9 | 4.5 | 79.2 | n.D. | n.D. | n.D. | n.D. | Not determi ned |

(continued)

| Ex. | STSA[4] / mm$^2$/g | Volatiles[8] / % | Toluene transmittance[2] at 425 nm | PAH22 content / mg/kg | MOAH[11] / mg/kg | MOSH / POSH[11] / mg/kg | Ash content[3] / wt.-% | Particle size distribu tion x99 / $\mu$m[8] |
|---|---|---|---|---|---|---|---|---|
| 12 | 69.3 | 1.3 | 99.6 | n.D. | n.D. | n.D. | n.D. | Not determi ned |

[9]Volatiles were measured at 950 °C for 7 min as described below.
[10]The PAH22 content was measured as described below.
[11]The MOAH and MOSH/POSH values were determined as mentioned below.
*The rCB of Comp. Example 1 was not milled to particle size distribution x99 of < 5 $\mu$m.

Determination of the mass concentration of Mineral oil hydrocarbons (MOSH/POSH and MOAH) in Carbon black using HPLC/GC-FID

After the extraction of the hydrocarbons (see "Sample preparation and extraction"), the fraction containing MOSH/POSH is separated from the fraction containing MOAH using an online HPLC/GC coupling on a silica gel phase.

The final quantitative determination of both fractions is carried out by a Gaschromatograph (GC) with a flame ionization detector (FID). The following hydrocarbons can be recorded analytically within the scope of this test specification:

*Mineral oil saturated hydrocarbons and Polyolefin oligomeric saturated hydrocarbons (MOSH/POSH):* **MOSH:** Saturated hydrocarbons from mineral oil. These consist of paraffins (open-chain hydrocarbons) and naphthenes (cyclic hydrocarbons), which are usually highly alkylated and either come directly from petroleum or were formed through the hydrogenation of aromatics and other conversion processes during refining. **POSH:** Saturated hydrocarbons, which occur as oligomers from polyolefins (e.g. polyethylene, polypropylene) and related products in plastics and can be transferred to food. The MOSH and POSH hydrocarbons are not separated.

*Mineral oil aromatic hydrocarbons (MOAH):* Hydrocarbons from mineral oil that consist of highly alkylated mono- and/or polyaromatic rings. Saturated and aromatic rings can be present together in partially hydrogenated mineral oils. Hydrocarbons with at least one aromatic ring are included in the MOAH, even if they largely consist of saturated hydrocarbons.

Sample preparation and extraction:

The fiberglass or glass extraction sleeve required to extract the samples is cleaned beforehand. To do this, the sleeve is pre-extracted with cyclohexane for at least 24 hours (Soxhlet extraction with N$_2$ flushing of the condenser). The required glass wool and the extraction devices are also pre-extracted or cleaned with cyclohexane.

To control the influence of the blank value, the cleaned sleeve is extracted with cyclohexane after drying. This extract is processed in the same way as the sample, i.e. by adding 20 $\mu$L ISTD solution (see tables below) and concentrating the solvent to a final volume of 2.0 mL. After the sample has been homogenized, 3 g of carbon black are weighed into the extraction sleeve. After adding 20 $\mu$L ISTD solution (specified before extraction), the sleeve is closed with cleaned glass wool. The Soxhlet extraction is then carried out for 24 hours with N$_2$ flushing of the condenser with cyclohexane. After the extraction has been completed and cooled to room temperature, the concentration is carried out on a rotary evaporator/ Büchi Syncore to a final volume of 1 mL. 1.0 mL Cyclohexane is then added to the extract and the glass surface is rinsed with the solvent. For measurement, 50 $\mu$L of this solution is injected into the Online-HPLC/GC-FID system.

Fractionation and quantification:

For identification and quantification using online HPLC/GC-FID, the fractions of MOSH/POSH and MOAH separated on the normal phase HPLC are transferred to the gas chromatograph. The individual fractions are then chromatographically separated and quantified.

An internal standard solution with 9 substances (different saturated and aromatic hydrocarbons, see Tables 8i and 8ii) is spiked into each sample.

The quantitative calculation of the MOSH/POSH and MOAH fractions is carried out using the peak areas of the Humps or Unresolved Complex Mixture (UCM) for each fraction using the standards via their response factors. Due to the detection using FID, the response factors of the saturated hydrocarbons and the aromatic hydrocarbons are set equal.

For the MOSH/POSH fraction this is usually Bicyclohexyl (CyCy) and for the MOAH fraction it is tri - tert -butylbenzene (TBB) or 2-methylnaphthalene. If coelutions are recognizable, another ISTD is used as an alternative for quantification.

The individual fractions, belonging to the boiling point ranges are also quantified using the internal standards and included as results in the report.

The following results are noted and the total amount of MOSH/POSH and the total amount of MOAH are reported:

MOSH/POSH (C10-C50), total amount

MOSH/POSH ($\geq$C10-$\leq$C16)
MOSH/POSH (>C16-$\leq$C20)
MOSH/POSH (>C20-$\leq$C25)
MOSH/POSH (>C25-$\leq$C35)
MOSH/POSH (>C35-$\leq$C40)
MOSH/POSH (>C40-$\leq$C50)

MOAH (C10-C50), total amount

MOAH ($\geq$C10-$\leq$C16)
MOAH (>C16-$\leq$C25)
MOAH (>C25-$\leq$C35)
MOAH (>C35-$\leq$C50)

Chromatographic separation and detection:

HPLC analysis

To separate the MOSH and MOAH fractions using normal phase chromatography: HPLC separation column: Restek , Allure Silica 5$\mu$m 250mm*2.1mm ID with guard column 30mm * 2.1mm ID

| | |
|---|---|
| Eluent A: | Hexane |
| Eluent B: | Dichloromethane |
| Flow: | 300 $\mu$l/min. |

Gradient program optimized for separating the MOSH/MOAH fractions
MOSH fractionation: approx. Start 2.0 min. Fraction length = 90 sec.
MOAH fractionation: approx. Start 4.0 min. Fraction length = 90 sec.
Backflush the HPLC column after 6.1 min.
GC analysis

Configuration and preparation of the device

Guard column retention gap:

Restek - MXT Siltek Guard Columm Dimension: Length 10m x 0.53mm ID, disabled Separation column: Restek MXT - 1 dimension: length 15 m x 0.25 mm ID; Film thickness 0.25 $\mu$m

| | |
|---|---|
| Carrier gas: | Hydrogen |
| Initial temperature: | 60°C |
| Hold time: | 6 min. |
| Oven program: | 20°C/min. to 370 °C Hold = 6.5 min |
| Detector : | FID |

detector Temperature : 380°C
FID gases: 30 mL/min Hydrogen,
25 mL/min make- up gas (Nitrogen)

300 mL /min Synthetic air

Tables 8i and 8ii: ISTD composition (internal standard solution)

**Table 8i:** MOSH fraction (in elution order):

| Substance | CAS No. | Abbreviation | Concentration |
|---|---|---|---|
| n- Undecane | [1120-21-4] | (C11) | 300 $\mu$g / mL |
| Cyclohexylcyclohexane or Bicyclohexyl | [92-51-3] | (CyCy) | 300 $\mu$g/mL |
| n- Tridecanes | [629-50-5] | (C13) | 150 $\mu$g / mL |
| 5-alpha-Cholestane | [481-21-0] | (cho) | 600 $\mu$g / mL |

**Table 8ii:** MOAH fraction (in elution order):

| Substance | CAS No. | Abbreviation | Concentration |
|---|---|---|---|
| Pentylbenzene | [538-68-1] | (5B) | 300 $\mu$g / mL |
| 2-Methylnaphthalene | [91-57-6] | (2-MN) | 300 $\mu$g / mL |
| 1-Methylnaphthalene | [90-12-0] | (1-MN) | 300 $\mu$g / mL |
| 1,3,5-Tri-tert-butylbenzene | [1460-02-2] | (TBB) | 300 $\mu$g / mL |
| Perylene | [198-55-0] | (By) | 600 $\mu$g / mL |

**Volatiles at 950°C**

Volatiles at 950°C were measured using a thermogravimetric instrument of Fa. LECO Instrumente GmbH (TGA-701) according to the following protocol: Pans were dried at 650°C for 30 min. The carbon black materials were stored in a desiccator equipped with desiccant prior to measurements. Baked-out pans were loaded in the instrument, tared and filled with between 0.5 g to 10 g carbon black material. Then, the oven of the TGA instrument loaded with the sample-filled pans was gradually heated up to 105°C (heating rate 20 °C/min) by automated software control and the samples were dried until a constant mass was achieved. Subsequently, the pans were closed by lids, the oven was purged with nitrogen (99.9 vol% grade) and heated up to 950°C (heating rate 20 °C/min). The oven temperature was kept at 950°C for 7 min. The content of volatiles at 950°C was calculated using the following equation:

$$Volatiles = \frac{m(prior\ to\ heating) - m(after\ 7\ minutes@950°C)}{m(prior\ to\ heating)} \cdot 100\%.$$

PAH22 content

The PAH22 content was each determined following the method entitled "Determination of PAH content of Carbon Black", dated July 8, 1994, as developed by Cabot Corp., and incorporated by the American Food and Drug Administration (FDA) in the U.S. Code of Federal Regulations (CFR) 21 Sec.178.3297, as follows:

The carbon black material was crushed in a mortar with a pestle until a homogenous powder was obtained. A suitable amount (up to 10 g) of the powder was precisely weighed in a cellulose extraction thimble (MN 645, Macherey-Nagel, Düren, Germany). A glass wool plug and cellulose pieces from an extraction thimble were put on top of the carbon black and the filled thimble then loaded in the extraction chamber of a 100 mL Soxhlet apparatus with a 250 mL round bottom flask. Toluene was added to the flask and the condenser of the apparatus was gently flushed with nitrogen. The sample was then subjected to Soxhlet extraction with toluene in the Soxhlet apparatus for 48 h under light protection at a rate of approx. 10 cycles per hour. The obtained raw extract was then concentrated to slightly over 5 mL by means of a rotary evaporator operated at 40°C and a pressure reduction of 5 kPa as a minimum (Büchi Rotavapor R-200, Büchi Labortechnik AG, 9230 Flawil, Switzerland). The extract was then transferred to a 10 mL volumetric flask and brought to the mark by adding fresh toluene. To an aliquot of the extract were added 17 deuterated PAH standards ($D_8$-Naphthalene, $D_8$-Acenaphthylene, $D_{10}$-Acenaphthene, $D_{10}$-Fluorene, $D_{10}$-Phenanthrene, $D_{10}$-Anthracene, $D_{10}$-Fluoranthene, $D_{10}$-Pyrene, $D_{12}$-Benzo[a]anthracene, $D_{12}$-Chrysene, $D_{12}$-Benzo[b]fluoranthene, $D_{12}$-Benzo[k]fluoranthene, $D_{12}$-Benzo[a]pyrene, $D_{14}$-Dibenz[a,h]anthracene, $D_{12}$-Benzo[g,h,i]perylene, $D_{12}$-Indeno[1,2,3-c,d]pyrene and $D_{12}$-Coronene, each in an amount of 200 ng). Then, the extract aliquot was cleaned-up by treatment with a silica gel column (1 g silica

gel/13% $H_2O$, 8 to 10 mm inner diameter and 5 $cm^3$ capacity). Subsequently, a further deuterated compound, $D_{12}$-Perylene, was added to the cleaned-up extract as recovery standard in an amount of 200 ng. The thus obtained solution was then used for HRGC/LRMS analysis (Capillary gas chromatography coupled with low resolution mass spectrometry) for PAH identification and quantification using the following instrumentation and conditions: Gas chromatograph: Thermo Scientific GC-Ultra with PTV injector, GC-column: 60 m DB5-MS, 0.25 mm ID, 0.25 $\mu$m film thickness; temperature program GC oven: preheating oven to 80°C, sample injection, holding for 2 min at 80°C, heating with a rate of 25°C/min to 180°C, heating with a rate of 8°C/min to 220°C, heating with a rate of 2°C/min to 250°C, heating with a rate of 3°C/min to 280°C, heating with a rate of 5°C/min to 320°C, hold at 320°C for 21min and 18 seconds; Mass spectrometer: Thermo Scientific Trace DSQ LRMS, operated in the electron impact mode (EI) and Selected Ion Monitoring (SIM Mode); mass resolution: 1 amu; monitoring of molecular and fragment ions for the individual PAH compounds. Calibration check of the instrument was performed for each analysis sequence by injection of mixtures containing all native PAHs of interest and the above-mentioned deuterated standards. Identification of the PAH species was achieved by analysis of the relative retention time, the molecular and fragment ions, and the fragmentation ratio. Quantification was performed using the instrumentation software via the deuterated internal PAHs using the isotope dilution and internal standard method. The PAH22 content was calculated by summing up the individual determined concentrations of the 22 PAH compounds, whereby for compounds, whose concentration were below the limit of quantification (LOQ), the LOQ was adopted as the respective concentration.

Results

As can be seen from table 8, the surface area STSA is increased after the gasification of the recovered carbon black. Moreover, the toluene transmittance at 425 nm, PAH 22, MOAH, and MOSH/POSH could be significantly reduced. It is believed that the gasification of recovered carbon black according to the invention results in a significantly improved carbon black having less impurities.

**In-Rubber tests**

The rubber compositions are mentioned in table 9. The ESBR Buna SB 1500 was introduced to a laboratory mixer GK1.5E with an intermeshing PES5-rotor geometry made by Harburg Freudenberger and milled for 30 seconds at a chamber temperature of 40°C, a fill factor of 0.66 and a rotor speed of 45 rpm. Subsequently, half of the carbon black volume, ZnO and stearic acid were added under milling. After 90 seconds the other half of the carbon black volume and the 6PPD were added. After further 90 secs the ram was lifted and cleaned, and the batch was mixed for another 90 seconds. The total mixing time in the internal mixer was 5 minutes and afterwards the batch was dropped on an open mill for cooling down and additional distributive mixing. The batch temperature did not exceed 160°C in the first mixing step. The batch was allowed to rest overnight.

During the second and final mixing step the sulfur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The resulting vulcanizable compositions (green compounds) were cured between 8 and 14 minutes (Examples: 1B: 12 min, 2B: 8 min, 3B: 12 min, 4B: 8 min, 5B: 8 min, 6B: 8min, 7B: 12 min, 8B: 8 min, 9B: 10 min, 10B: 14 min, 11B: 13 min, 12B: 10 min) at a temperature of 165 °C.

Table 9: The rubber compositions using different carbon blacks as noted in table 1.

|  | Unit | Composition |
|---|---|---|
| Rubber[12] | phr | 100 |
| Carbon black[13] | phr | 50 |
| ZnO[14] | phr | 3 |
| Stearic Acid[15] | phr | 2 |
| 6PPD[16] | phr | 1 |
| Sulfur[17] | phr | 1.5 |

(continued)

| | Unit | Composition |
|---|---|---|
| CBS[18] | phr | 1.5 |

[12]Rubber ESBR, Buna SB 1500, Resinex Deutschland GmbH
[13]Carbon black: Recovered carbon black 1, recovered carbon black 2 or recovered carbon black 3 (see table 7)
[14]ZnO, ZNO RS RAL 844 C, Norkem B.V.
[15]Stearic Acid, Palmera B 1804, Caldic Deutschland GmbH
[16]6PPD, VULKANOX 4020/LG, Brenntag GmbH
[17]Sulfur, MAHLSCHWEFEL 80/90° unbeölt, Avokal GmbH
[18]CBS, VULKACIT CZ/EG-C, Lanxess N.V.

The properties of the specimens are indicated in table 10.

Table 10: Properties of the specimens including the respective carbon black.

| Ex. | Tensile Strength[19] / MPa | Elongation at Break[20] /% | Modulus[21] 300% / MPa | Abrasion[22] / mm | Tear Resistance[23] (GRAVES) / N/mm | Topography relative peak area[24] / % | Max Loss Factor[25] tan(d) |
|---|---|---|---|---|---|---|---|
| Comp. 1 | 19.9 | 643 | 6.4 | n. D. | n. D. | 3.82 | 0.142 |
| 2 | 17.1 | 536 | 8.6 | n. D. | n. D. | 0.93 | 0.126 |
| 3 | 17.5 | 545 | 8.8 | n. D. | n. D. | 1.32 | 0.117 |
| 4 | 18.7 | 543 | 8.9 | n. D. | n. D. | 1.02 | 0.115 |
| 5 | 19.9 | 584 | 8 | n. D. | n. D. | 1.05 | 0.126 |
| 6 | 18.8 | 550 | 8.3 | n. D. | n. D. | 1.09 | 0.117 |
| 7 | 18.7 | 607 | 6.5 | n. D. | n. D. | 3.19 | 0.130 |
| 8 | 19.4 | 572 | 8 | n. D. | n. D. | 0.98 | 0.125 |
| Comp. 9 | 26.3 | 618 | 6.9 | 96 | 19.1 | 2.76 | 0.150 |
| 10 | 27.2 | 680 | 6.3 | 108 | 21.3 | 0.38 | 0.174 |
| Comp. 11 | 23,3 | 631 | 6.7 | 111 | 17.9 | 1.01 | 0.142 |
| 12 | 21.3 | 610 | 8 | 117 | 18.8 | 0.86 | 0.138 |

[19]Tensile Strength was measured ISO 37 - 2012, S2.
[20]Elongation at Break was measured ISO 37 - 2012, S2.
[21]Modulus 300% was measured ISO 37 - 2012, S2.
[22]Abrasion was measured at 23 °C DIN ISO 4649:2014-03, 10 N.
[23]Tear Resistance GRAVES was measured DIN ISO 34-1:2016-09, method B, variant (b).
[24]The relative peak area was measured
[25]Loss Factor tan(d) was measured as described below.

Loss factor tan(d)

The above-mentioned values and the loss factor tan(d) were measured according to DIN 53 513 in strain-controlled mode (1 ± 0.5 mm) or force-controlled mode (50 N ± 25 N) on a cylindrical specimen (10 mm in height and 10 mm in diameter) at 60°C with a frequency of 16 Hz.

Topography relative peak area

Topography relative peak area is a measure for filler dispersion determined by means of surface topography, inclusive of Medalia correction, according to the procedure described in A. Wehmeier, "Filler Dispersion Analysis by Topography Measurements", Technical Report TR 820, Degussa GmbH as well as in A. Wehmeier, "Entwicklung eines Verfahrens zur Charakterisierung der Füllstoffdispersion in Gummimischungen mittels einer Oberflachentopographie", Thesis, 1998 at the Münster University of Applied Sciences, and DE 199 17975 C2.

Results

The max loss factor tan(d) could be significantly increased. This is a hint that the coke which is generally present on the surface of the compared rCB has been removed. DeCoking improves the dispersability (relative peak area) and the tear resistance of the material, but negatively influences for example the abrasion (due to the higher ash content). For the rCB by FP also the tensile strength is improved.

It will be appreciated that various modifications can be made, and that many changes can be made in the preferred embodiments without departing from the principle of the invention.

**Claims**

1.  A method for the treatment of carbon black comprising:
    gasification of a carbon black-containing feedstock at a temperature of 730 °C to 950 °C.

2.  The method according to aspect 1, wherein the carbon black-containing feedstock is milled before the gasification step, and/or wherein the obtained carbon black is milled after the gasification step.

3.  The method according to any one of aspects 1 or 2, wherein the gasification is carried out for 1 min to 10 h, preferably 10 min to 5 h, more preferably 20 min to 3 h, and most preferably 30 min to 2 h.

4.  The method according to any one of the preceding aspects, wherein the gasification is carried out at a temperature of 730 °C to 910 °C, preferably 730 °C to 900 °C, more preferably 740 to 890 °C, even more preferably 740 °C to 860 °C, and most preferably 790 to 850 °C.

5.  The method according to any one of the preceding aspects, wherein the carbon black-containing feedstock is heated to the required temperature for the gasification (b) by using a burner, preferably the fuel for the burner is hydrogen or natural gas, preferably hydrogen.

6.  The method according to any one of the preceding aspects, wherein the gasification is carried out by subjecting the carbon black-containing feedstock with a gas comprising $H_2O$ and/or $CO_2$, preferably $H_2O$.

7.  The method according to any one of the preceding aspects, wherein the gasification is carried out by subjecting the carbon black-containing feedstock with a gas comprising 20 to 100 mol-% $H_2O$ and/or $CO_2$, preferably 30 to 100 mol-% $H_2O$ and/or $CO_2$, more preferably 40 to 90 mol-% $H_2O$ and/or $CO_2$, most preferably 50 to 80 mol-% $H_2O$ and/or $CO_2$, based on the total number of moles of the gas.

8.  The method according to any one of the preceding aspects, wherein the $H_2O$ for the gasification as well as the required heat is provided by at least one hydrogen burner.

9.  The method according to any one of the preceding aspects, wherein the gasification is carried out in a fluidized bed reactor, auger reactor, batch reactor, fixed bed reactor, electric furnace and/or rotary kiln.

10. The method according to any one of the preceding aspects, wherein the carbon black-containing feedstock comprises recovered carbon black, and/or wherein the carbon black-containing feedstock is recovered carbon black and the recovered carbon black is derived from the pyrolysis of rubber granulate, plastic granulate, and/or biomass-based granulate, preferably rubber granulate.

11. The method according to any one of the preceding aspects, volume average particle size x90 of the obtained treated carbon black is from 0.3 to 50 $\mu$m preferably 0.5 to 50 $\mu$m, more preferably 0.8 to 20 $\mu$m, and most preferably 1 to 10 $\mu$m, wherein the volume average particle size is preferably measured as described in the specification by dry measurement using laser diffraction.

12. The method according to any one of the preceding aspects, wherein the carbon black-containing feedstock comprises 1 to 50 wt.-% coke, preferably 5 to 40 wt.-% coke, more preferably 6 to 35 wt.-% coke, and most preferably 10 to 30 wt.-% coke, based on the total weight of the carbon black-containing feedstock, and/or wherein the obtained treated carbon black after the gasification has a coke content below 15 wt.-%, preferably below 10 wt.-%, more preferably below 5 wt.-%, and most preferably below 1 wt.-%, based on the total weight of the treated carbon black.

13. The method according to any one of the preceding aspects, wherein the obtained treated carbon black after the gasification

(i) has a transmittance of at least 80 %, preferably at least 85 %, more preferably at least 90 %, even more preferably at least 95 %, most preferably at least 98 % wherein the transmittance at 425 nm in toluene is measured according to ASTM D 1618-18 against toluene, and/or
(ii) has a transmittance of at least 80 %, preferably at least 85 %, more preferably at least 90 %, even more preferably at least 95 %, most preferably at least 98 % wherein the transmittance at 355 nm in toluene is measured according to ASTM D 1618-18 against toluene, wherein the transmittance is measured at 355 nm instead of 425 nm, and/or
(iii) has a transmittance of at least 80 %, preferably at least 85 %, more preferably at least 90 %, even more preferably at least 95 %, most preferably at least 98 % wherein the transmittance at 300 nm in toluene is measured according to ASTM D 1618-18 against toluene, wherein the transmittance is measured at 300 nm instead of 425 nm.

14. Treated carbon black, preferably defined according to anyone of the previous claims, wherein the treated carbon black has a MOAH value of below 500 mg/kg, preferably below 300 mg/kg, more preferably below 250 mg/kg, and most preferably below 200 mg/kg, determined as described in the specification, and/or treated carbon black, preferably defined according to anyone of the previous claims, wherein the treated carbon black has a cumulative pore volume for pore sizes of 0.3 to 1.5 nm of 0.015 to 0.050 cm$^3$/g, wherein the cumulative pore volume is determined as mentioned in the specification.

15. Use of gasification of a carbon black-containing feedstock comprising coke at a temperature of 730 °C to 950 °C to selectively reduce the coke content with respect to the carbon black content of the carbon black-containing feedstock and/or use of gasification of a carbon black-containing feedstock comprising coke at a temperature of 730 °C to 950 °C to increase the cumulative pore volume for pore sizes of 0.3 to 1.5 nm of the obtained treated carbon black with respect to the cumulative pore volume for pore sizes of 0.3 to 1.5 nm of the carbon black-containing feedstock, wherein the cumulative pore volume is determined as mentioned in the specification.

FIG. 1

FIG. 2

FIG. 3

EP 4 582 376 A1

400

FIG. 4

FIG. 5

Europäisches
Patentamt

European
Patent Office

Office européen
des brevets

# EUROPEAN SEARCH REPORT

**Application Number**

EP 24 15 0495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | P'YANOVA L. G. ET AL: "The influence of gasification conditions of carbon black on the change in texture characteristics", INTERNATIONAL CONFERENCE ON PHYSICS AND CHEMISTRY OF COMBUSTION AND PROCESSES IN EXTREME ENVIRONMENTS (COMPHYSCHEM'20-21) AND VI INTERNATIONAL SUMMER SCHOOL "MODERN QUANTUM CHEMISTRY METHODS IN APPLICATIONS", vol. 2304, 8 December 2020 (2020-12-08), pages 040012-040018, XP93184399, DOI: 10.1063/5.0033438 Retrieved from the Internet: URL:https://pubs.aip.org/aip/acp/article-pdf/doi/10.1063/5.0033438/14220828/040012_1_online.pdf> * table 1 and the following paragraph. results and discussion.; table 1 * * the whole document * | 1-15 | INV. C01B32/30 C09C1/48 |
| | ----- | | **TECHNICAL FIELDS SEARCHED (IPC)** |
| X | HWANG JUN YOUNG ET AL: "A study of the gasification of carbon black with molten salt of Li2CO3and K2CO3for application in the external anode media of a direct carbon fuel cell", CURRENT APPLIED PHYSICS, ELSEVIER, AMSTERDAM, NL, vol. 15, no. 12, 8 October 2015 (2015-10-08), pages 1580-1586, XP029302588, ISSN: 1567-1739, DOI: 10.1016/J.CAP.2015.10.003 * 3. Experimental method * * the whole document * ----- -/-- | 1-15 | C01B C09C |

The present search report has been drawn up for all claims

| Place of search | Date of completion of the search | Examiner |
|---|---|---|
| The Hague | 11 July 2024 | Straub, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 15 0495

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/201784 A2 (MOL HUNGARIAN OIL AND GAS PLC [HU]; KURKELA ESA ALBERT [FI] ET AL.) 8 October 2020 (2020-10-08) <br> * claims 1-3 * <br> * the whole document * <br> ----- | 1-15 | |
| X | XIE YANQI ET AL: "A critical review on production, modification and utilization of biochar", <br> JOURNAL OF ANALYTICAL AND APPLIED PYROLYSIS, ELSEVIER BV, NL, <br> vol. 161, 3 December 2021 (2021-12-03), <br> XP086926324, <br> ISSN: 0165-2370, DOI: <br> 10.1016/J.JAAP.2021.105405 <br> [retrieved on 2021-12-03] <br> * and discussion of its content; table 5 * <br> * the whole document * <br> ----- | 1-14 | |
| | | | **TECHNICAL FIELDS SEARCHED (IPC)** |

The present search report has been drawn up for all claims

| Place of search | Date of completion of the search | Examiner |
|---|---|---|
| The Hague | 11 July 2024 | Straub, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0495

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | Publication date | Patent family member(s) | Publication date |
|---|---|---|---|
| WO 2020201784 A2 | 08-10-2020 | HU 231341 B1 | 28-01-2023 |
| | | WO 2020201784 A2 | 08-10-2020 |

EPO FORM P0459

For more details about this annex : see Official Journal of the European Patent Office, No. 12/82

## REFERENCES CITED IN THE DESCRIPTION

**Patent documents cited in the description**

- US 20020117388 A1

- DE 19917975 C2

**Non-patent literature cited in the description**

- **J.-B. DONNET et al.** Carbon Black:Science and Technology
- **SUDIP K. SAMANTA** ; **OM V. SINGH** ; **RAKESH K. JAIN**. Polycyclic aromatic hydrocarbons: environmental pollution and bioremediation. *TRENDS in Biotechnology*, 06 June 2002, vol. 20, 243-248
- **W. HOFMANN**. Rubber Technology Handbook. Hanser Verlag, 1994
- Determination of PAH content of Carbon Black. U.S. Code of Federal Regulations (CFR) 21 Sec.178.3297. Cabot Corp., and incorporated by the American Food and Drug Administration (FDA), 08 July 1994

- **A. WEHMEIER**. Filler Dispersion Analysis by Topography Measurements. *Technical Report TR 820*
- Entwicklung eines Verfahrens zur Charakterisierung der Füllstoffdispersion in Gummimischungen mittels einer Oberflachentopographie. **A. WEHMEIER**. Thesis. Münster University of Applied Sciences, 1998